(19) **Europäisches Patentamt / European Patent Office / Office européen des brevets**

(11) **EP 4 571 784 A1**

(12) **EUROPEAN PATENT APPLICATION**

(43) Date of publication:
**18.06.2025 Bulletin 2025/25**

(21) Application number: **23307172.9**

(22) Date of filing: **11.12.2023**

(51) International Patent Classification (IPC):
**G21K 1/00** (2006.01)

(52) Cooperative Patent Classification (CPC):
**G21K 1/006; G06N 10/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Pasqal**
**91300 Massy (FR)**

(72) Inventors:
• **BRIOSNE-FREJAVILLE, Clémence**
 **91300 MASSY (FR)**
• **MERIAUX, Guillaume**
 **91300 MASSY (FR)**
• **VILLARET, Guillaume**
 **91300 MASSY (FR)**

(74) Representative: **Slingsby Partners LLP**
**1 Kingsway**
**London WC2B 6AN (GB)**

(54) **METHOD FOR INTERACTING ELECTROMAGNETIC RADIATION WITH A MATTER PARTICLE**

(57) The present disclosure pertains to matter-light interaction methods and systems using optical tweezers. There is provided a method for interacting electromagnetic radiation with a matter particle. The method comprises generating a region of first electromagnetic radiation, where the first electromagnetic radiation is centred about a first wavelength. The method further comprises trapping the matter particle in the region, where one or more resonant frequencies for ejecting the matter particle from the region are associated with the region and matter particle. The method further comprises directing second electromagnetic radiation to overlap the region, where the second electromagnetic radiation is centred about a second wavelength, and repeatedly varying the intensity of the second electromagnetic radiation at one or more of the said resonant frequencies.

Fig. 9

**EP 4 571 784 A1**

## Description

### Field

The present invention is in the field of interacting electromagnetic radiation with a matter particle, in particular but not limited to optical tweezers and the calibration of the same.

### Background

The optical tweezer is an incredibly useful and versatile tool that is becoming more and more commonplace in industrial and academic settings. Optical tweezers act much like a normal pair of tweezers, able to pick up and move an object from one place to another. However, unlike their larger counterparts, optical tweezers are specialised at holding, manipulating and moving incredibly small objects with high precision. Optical tweezers have found uses across a variety of disciplines, one notable example being neutral atom quantum computing, wherein the optical tweezers are used to move and hold neutral atoms.

An optical tweezer may be created when a beam of electromagnetic radiation is tightly focused by a beam-shaping device (such a spatial light modulator, SLM) and high-numerical aperture optics. Interactions between the beam and the particle (caused by the intensity gradient across the beam) can give rise to the particle being trapped in the centre of the beam. When focused, the particle will be held at the beam waist of the electromagnetic radiation beam. The location along the beam where a particle would be held is called an optical trap.

A singular optical tweezer can be used for both holding and moving a particle. For some applications there will only be one tweezer which performs both of these functions. In other applications there will be separate tweezers with different primary functions. For example, in neutral atom quantum computing, a quantum register is created by generating a plurality of optical traps. These optical traps can trap a particle in them and are normally not moved once they have been generated. There may also be a tweezer that is moveable, which is able to select a particle from one trap and move it to another trap. In this instance, there are two distinct types of tweezers that are generally used: a trapping tweezer and a moving tweezer.

When operating the moving tweezer between the trap sites, the moving tweezer can misalign with some of the trap sites, which reduces the efficiency and accuracy of the system. This misalignment can be caused by a multitude of effects, such as those arising from dispersion, e.g. chromatic aberration, of any of the tweezers.

### Summary

In a first aspect of the present invention there is presented a method for interacting electromagnetic, EM, radiation with a matter particle; the method comprising: generating a region of first EM radiation; the first EM radiation centred about a first wavelength; trapping the matter particle in the region wherein one or more resonant frequencies for ejecting the matter particle from the region are associated with the region and matter particle; directing second EM radiation to at least partially overlap the region; the second EM radiation centred about a second wavelength; repeatedly varying the intensity of the second EM radiation at one or more of the said resonant frequencies.

By trapping a matter particle with first EM radiation and then repeatedly varying the intensity, for example from a zero-intensity to an arbitrary maximum intensity, the method may selectively eject the matter particle from the trap without needing to alter the characteristics of the trapping radiation. The probability of ejection of the matter particle is related to the overlap, in space, of the second EM to the first EM radiation forming the trap. This may be used in a variety of ways including determining how aligned the second EM radiation is with the region of the first EM radiation forming the trap. Another use may be to selectively eject the matter particle between two successive quantum computations. The method may be for calibrating trapping beams of the first EM radiation with tweezer beam of the second radiation wherein the tweezer beams are for moving matter particles to and from an EM trap of first EM radiation. The traps may be used for a quantum computation, for example a neutral atom quantum computation that may be analogue or digital.

The first aspect may be adapted according to any teaching herein, including but not limited to any one or more of the following options.

The wavelength at which the first EM radiation is centred may be the same or different to the wavelength at which the second EM radiation is centred. The magnitude of the difference between the two wavelengths at which the first and second EM radiations are centred may be, for example, between zero and 100nm. In the instance where the difference is zero, the wavelength at which the first EM radiation is centred is the same as the wavelength at which the second EM radiation is centred.

The variation of the intensity may periodically vary, for example at a constant frequency. The repeated variation may be from one or more first intensity levels to one or more second intensity levels wherein any first intensity level is lower than the time-adjacent second intensity levels. Preferably, the method repeatedly alternates between one first intensity level to one second intensity level. The number of repeated changes between the high and low intensity levels may be two or more, ten or more, one hundred or more. Preferably, the variation is at a constant frequency between common high and low intensity levels over a period of time. The lower of the intensity levels may be zero intensity, or substantially zero-intensity or a non-zero intensity level.

The matter particle may be a neutral atom, a molecule or an ion. The neutral atom may be an alkali metal. Preferably the wavelength of the first and second EM radiation are detuned from the electronic resonances of the matter particle (in other words the wavelength, hence energy of the first and second EM radiation are 'off -resonance').

The method may create a plurality of regions of first EM radiation. Preferably the plurality of first EM radiation regions are spatially separate to one another. Creating the plurality of first EM radiation regions that act as traps may be accomplished using apparatus such as, but not limited to, an EM source (such as a laser) modulated by a spatial light modulator (SLM). Each of the regions of first EM radiation may be used to trap a different matter particle. Second EM radiation may be overlapped with each of the first EM radiation regions. This may be done sequentially or simultaneously depending on the equipment used to generate the second EM radiation beam(s). The second EM radiation may be focussed, using one or more EM focussing components such as mirrors or lenses, to regions of minimum beam waist. These regions of the second EM radiation may also be used for trapping the matter particle. One or more second EM radiation sources may be used to generate the regions of second EM radiation.

Directing the second EM radiation may be any of, but not limited to the actions of: focussing the second EM radiation (including optionally changing the focussing dynamics such as focussing magnitude or distance from lens to minimum beam waist); moving a collimated, diverging or focussing beam of EM radiation such that a the beam follows a different spatial path and/or a region of minimum beam waist occupies a different portion of space. Equipment that may be optionally used to controllably direct the second EM radiation may be an actuator such as an acousto-optic deflector.

Trapping the matter particle in the region may be accomplished by creating a dipole force. The first EM source may be a laser or other EM generating apparatus such as a broadband source as described in: https://www.ucl.ac.uk/quantum/news/2020/aug/making-optical-tweezers-using-broadband-light.

The light source may generate an oscillating electric dipole in the matter particle which interacts with the electric field of the first EM radiation to form an EM (e.g., optical) potential. The optical potential may vary with first EM radiation intensity. The potential gradient gives rise to the dipole force. When the light is red-detuned, matter particles such as atoms may experience a dipole force towards the intensity maximum of the EM field. The matter particle may therefore become trapped at the centre of focus of the first EM radiation, particularly at the beam waist of a tightly focussed beam of first EM radiation. When the radiation is blue-detuned, matter particles such as atoms may experience a dipole force away from the intensity maximum of the EM field. The matter particle may therefore become trapped at the centre of focus of the first EM radiation, particularly at the beam waist of a tightly focussed beam of first EM radiation when the first EM radiation is used to form a bottle beam.

Optionally, the method may further comprise determining whether the matter particle has been ejected from the region.

In some examples, if the method was used to perform an alignment calibration of the first and second EM radiation, a determination may be needed to see if the matter particle was ejected or not. The method of determining whether the matter particle was ejected may be any method monitoring the ejection.

Optionally, the step of determining whether the matter particle has been ejected from the region comprises monitoring the fluorescence of the matter particle. A further EM radiation, incident upon the matter particle, may cause the matter particle to fluoresce. This fluorescence may be imaged onto a detector such as a CCD camera.

Optionally, the region of first EM radiation occupies a first portion of space. Optionally, the method may further comprise: releasing the matter particle by removing the region from the first portion of space; generating a further region of the first EM radiation occupying substantially the same first portion of space; trapping a further matter particle in the further region.

In some examples the matter particle may not be ejected. Therefore, the method may remove the matter particle by turning off the first radiation or moving the region rapidly enough to release the matter particle. A similar region of EM radiation may subsequently be generated to trap a further matter particle. In some examples the first EM radiation is turned off after the second EM radiation is intensity varied or 'flickered' for a duration of time and a second matter particle is trapped in the same position wherein further second radiation is overlapped and flickered either in the same or a different position, hence yielding the same or a different overlap.

Optionally, the method may further comprise: directing second EM radiation to at least partially overlap the further region; repeatedly varying the intensity of the second EM radiation at one or more of the said resonant frequencies; determining whether the further matter particle has been ejected from the further region; determining an ejection probability from the determination of the ejection of the matter particle and further matter particle.

The second EM radiation may be directed to at least partially overlap the further region to provide substantially the same overlap as the second EM radiation had with the first region. The intensity of the second EM radiation may subsequently be 'flickered'. The parameters of the flickering, e.g., lowest intensity; highest intensity; frequency of flickering; may be the same as or different to the parameters used for flickering the second EM radiation when it overlaps the first region. A determination may be made whether the further matter particle has been ejected from the further region. A determination of ejection probability may then be made based on the determination of the ejection of the matter particle and the further matter particle. This method may be repeated and additional further regions containing additional further matter particles may be generated. Additional determinations of ejection may be made, and these additional determinations may also be used to generate the ejection probability.

Optionally, the method may further comprise: directing further second EM radiation to at least partially overlap the region wherein the overlap associated with the directing of further second EM radiation is different to the overlap associated with the directing of the second EM radiation. The overlap may be different in any of: the region of space the overlap takes place in is different; the amount of overlap is different.

Optionally, the method may be configured such that: the directing of the second EM radiation comprises directing the second EM radiation along a first path; the directing of the further second EM radiation comprises directing the further second EM radiation along a second path that is different to the first path.

Optionally, the method may further comprise: repeatedly varying the intensity of the further second EM radiation at one or more of the said resonant frequencies; and, determining whether a matter particle has been ejected from the region.

Optionally, the method may further comprise determining a matter particle ejection profile from: a) the determination of whether the matter particle has been ejected from the region resulting from varying the intensity of the second EM radiation; b) the determination of whether the matter particle has been ejected from the region resulting from varying the intensity of the further second EM radiation.

The matter particle ejection profile may be a profile of ejection probabilities. An ejection probability may be generated from two or more measurements of ejection as described above, preferably five or more, preferably ten or more; possibly upper limits of measurements for the same overlap are 100, 500, 1000. The profile may be a map indicating probability of ejection vs spatial coordinate relative to the region of first EM radiation acting as a trap for the matter particle. The profile may optionally be generated by performing the step of directing the second EM radiation such that there is a different overlap with the first EM radiation before the step of producing further regions of first EM radiation.

Optionally, the method may further comprise calibrating an apparatus for controlling the directing of second EM radiation from the matter particle ejection profile.

Optionally, the method may further comprise using the matter particle ejection profile to move a matter particle intended for use in a quantum computation.

Optionally, the method may be configured such that the overlap of second radiation with first radiation comprises an overlap of a second radiation region with the region of the first radiation. The region associated with the second EM radiation may be a region of minimum beam waist.

Optionally, the method may further comprise determining a shape of the second radiation region from the overlap.

The second EM radiation region may occupy a 3-dimensional portion of space and may comprise a two-dimensional cross section, for example in a plane substantially perpendicular to the propagation direction of the beam. Preferably the 2D cross section is substantially circular. The intensity of the EM radiation region may be higher towards the centre than towards the edges. The second EM radiation may be intensity varied adiabatically at one of the said resonance frequencies. The waveform of the intensity variation may be substantially sinusoidal. Unlike previous embodiments with non-adiabatic intensity waveforms, the matter particle may not be ejected when located in the centre of the second EM radiation region. Instead, the matter particle may be ejected when located inside the second EM radiation region but not in the centre of said region. The profile resulting from this property may show the shape of the second EM radiation region. An asymmetry of the second EM radiation region may be determined from the shape of the EM radiation in the profile. The intensity of the second EM radiation may take any value between the intensity of the first EM radiation and ten times the intensity of the first EM radiation.

Associated with the first aspect is a system for interacting electromagnetic, EM, radiation with a matter particle; the system comprising: a first EM source assembly for generating a region of first EM radiation; the first EM radiation centred about a first wavelength; a chamber for accommodating the matter particle and region of first EM radiation to allow trapping of the matter particle in the region; wherein one or more resonant frequencies for ejecting the matter particle from the region are associated with the region and matter particle; a second EM source assembly for directing second EM radiation to at least partially overlap the region; the second EM radiation centred about a second wavelength; apparatus for controlling repeatedly varying the intensity of the second EM radiation at one or more of the said resonant frequencies.

The system may be adapted according to any teaching herein, including but not limited to any one or more of the following options.

Optionally, the system may be configured such that: the second EM source assembly comprises a second EM source; the system comprises a focussing assembly comprising at least one element for receiving the first EM radiation output from the first EM source and second EM radiation output from the second EM source.

Brief description of the figures

The present invention will now be described by way of example with reference to the accompanying drawings. In the drawings:

Figure 1 shows an example of a plurality of optical traps and a moving tweezer;

Figure 2a, 2b and 2c shows three examples of a combined potential well;

Figure 3 shows a schematic showing the operation of different components of the apparatus and the transfer of information around the system in order to move the second EM radiation beam;

Figure 4a shows a schematic depicting a set-up for a neutral atom quantum computer;

Figure 4b shows an example of a set-up for a neutral atom quantum computer;

Figure 5 shows a flow chart describing an example method of stamping;

Figure 6 shows a flow chart describing an example of a process of moving and stamping with a non-adiabatic waveform for calibrating the EM radiation beams where all determination results for a position are calculated before moving to a further position;

Figure 7 shows a graph plotting the intensity of two non-adiabatic second EM radiation beam pulses as a function of time;

Figure 8a shows a diagram of two EM radiation beams overlapping, with the second EM radiation beam not overlapping the matter particle, with no interaction between the second EM radiation beam and matter particle;

Figure 8b shows a diagram of two EM radiation beams overlapping, with the second EM radiation beam overlapping the matter particle, with negligible interaction between the second EM radiation beam and particle;

Figure 8c shows a diagram of two EM radiation beams considerably overlapping, with the second EM radiation beam overlapping the matter particle, with some interaction between the second EM radiation beam and particle;

Figure 9 shows a graph of a grid showing the recapture rate of a matter particle as a function of the second EM radiation beam's position for a non-adiabatic intensity-time waveform;

Figure 10 shows a flow chart describing the process of moving and stamping with a non-adiabatic waveform for calibrating the EM radiation beams where not all determination results are calculated for a position before moving to a further position;

Figure 11 shows two graphs of one pass of the grid showing the relative positions of the two EM radiation beams and whether the atom was ejected after the stamping procedure was applied;

Figure 12 shows five passes of the grid showing whether the atom was ejected after the stamping procedure was applied for each of the five passes;

Figure 13 shows a flow chart describing the process of moving and stamping with an adiabatic waveform for evaluating the shape of the second EM radiation where all determination results for a position are calculated before moving to a further position;

Figure 14 shows a graph plotting the intensity of two adiabatic second EM radiation beam pulses as a function of time;

Figure 15 shows a graph of a grid showing the recapture rate of a matter particle as a function of the second EM radiation beam's position for an adiabatic intensity-time waveform.

Detailed description

The present disclosure is directed to a method of interacting a matter particle with electromagnetic (EM) radiation. Reference is made to beams of electromagnetic (EM) radiation, which are used as optical tweezers. An optical tweezer is an EM radiation beam that exploits optical gradient forces to trap matter particles in three dimensions. The EM radiation may be optical radiation, where optical radiation is EM radiation in the ultraviolet spectrum, visible light spectrum, or infrared spectrum. The term 'optical' EM radiation may be referred to as radiation spanning between wavelengths of 100nm to 1mm. The term 'visible spectrum' may refer to wavelengths spanning between 400 and 700nm.

The term 'Infrared (IR) EM radiation' may refer to wavelengths spanning between 700nm to 1000 micrometres. Any of the following infrared spectral ranges may be used including: near-infrared ranging between 700nm and 1400nm; short-wavelength infrared ranging between 1400nm and 3 micrometres; mid-wavelength infrared ranging between 3 micrometres and 8 micrometres; long-wavelength infrared ranging between 8 micrometres and 15 micrometres; far-infrared ranging between 15 micrometres and 1000 micrometres.

The disclosed method of interacting a matter particle with EM radiation can be used for a plethora of applications, including the calibration of alignment of two optical tweezer beams. Some of the possible applications of the method will be discussed once the general principle of the method has been described.

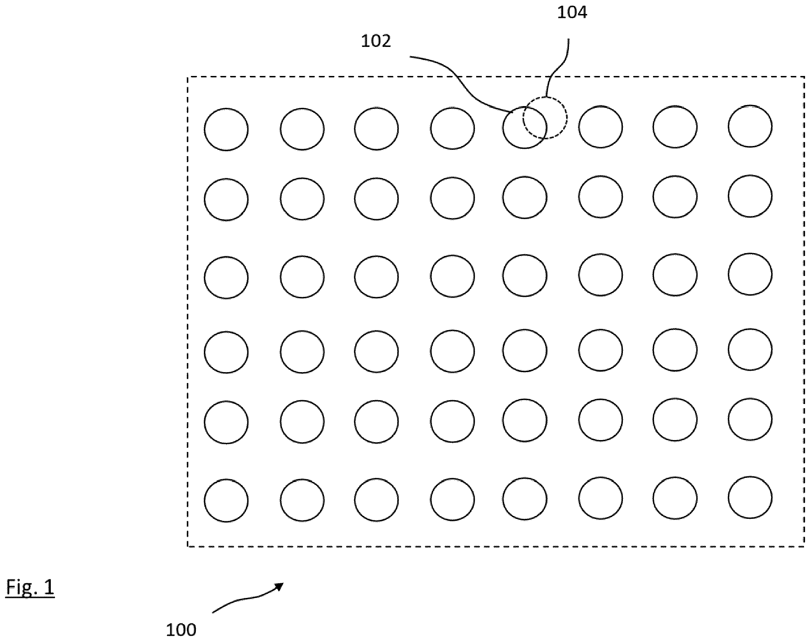

The disclosed method uses two EM radiation beams. A first EM radiation beam traps the matter particle, and a second EM radiation beam is used to interact with the matter particle being trapped in the first EM radiation beam. The first EM radiation beam is interchangeably referred to as the trapping tweezer, and the second EM radiation beam may be interchangeably referred to as the moving tweezer, if the second EM radiation beam may be configured to move. For some applications of the method the second EM radiation beam is not required to move. Figure 1 shows an example 100 where a plurality of spatially separate optical traps 102 are formed with the first EM radiation. The traps are arranged in a grid-like layout. An EM radiation spot corresponding to the beam waist of a moving tweezer 104 is shown overlapping with one of the first EM radiation traps. The moving tweezer is not aligned with the first EM radiation trap. The first EM radiation trap 102 holds a matter particle such as an atom. The moving tweezer is typically used to move a matter particle from one of the first EM radiation traps to another of the EM radiation traps. One example use of the present method is to calibrate the alignment of the first EM radiation traps with the moving tweezer such that, when the moving tweezer and first EM radiation traps are used for a desired application, the moving tweezer can be successfully positioned directly over a first EM radiation trap to 'pick-up' the matter particle. It is understood that the first EM radiation traps 102 are static in that they hold the same position in space whilst the moving tweezer 104 is moved.

The matter particle may be, for example, an atom or group of atoms. The matter particle may be, for example, an ion or group of ions. When the matter particle is an ion, precise control of the electric fields in the vicinity of the matter particle may also be required. The matter particle could be, for example, a molecule or group of molecules. The matter particle could be a biological cell such as a bacterium or human red blood cell, for example. The size of matter particles that may be trapped may include those between $0.5\mu m$ - $5\ \mu m$, for example around $1\ \mu m$. Matter particles of smaller sizes may also be trapped, including those with sizes between 0.01nm - 500nm, for example around 0.25nm. The matter particle may be a dielectric particle or group of dielectric particles. The EM radiation beams may be created by monochromatic EM radiation sources or broadband EM radiation sources, for example. The EM radiation beams may be lasers.

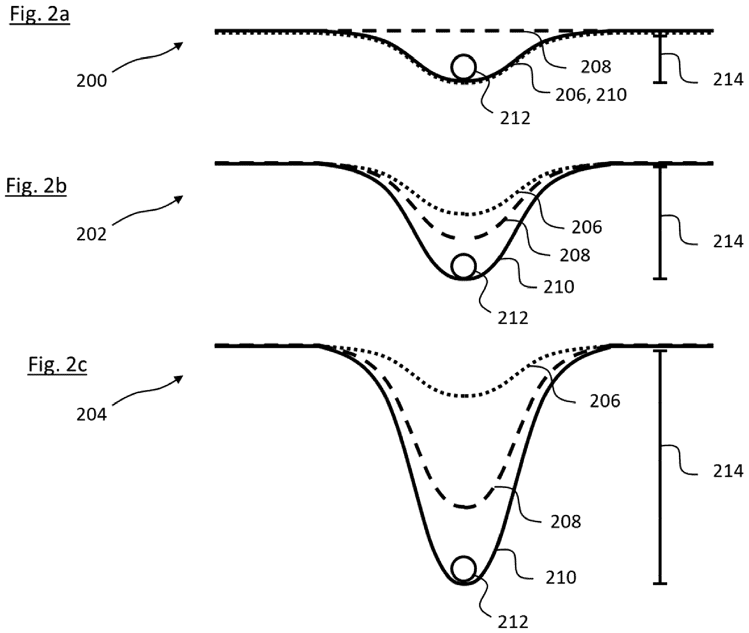

Figures 2a, 2b and 2c show three examples 200, 202, 204 of two EM radiation beams 206, 208 acting as optical tweezers. The horizontal axis represents the displacement across a one-dimensional cross section of the radiation beam profile at the beam waist of the radiation beam, and the vertical axis represents the potential experienced by a matter particle 212. For Figures 2a, 2b and 2c, the term 'potential' refers to the potential energy manifested by the radiation beams wherein a deeper (hence larger magnitude) potential signifies a greater negative energy. When divided by the Boltzmann constant, $k_B$, the potential may be quoted in units of microkelvin (mK). Figures 2a, 2b and 2c show examples of potentials corresponding to red-detuned light, which is described elsewhere herein. Energy wells for holding one or more matter particles may also be generated from blue-detuned light as described elsewhere herein. The first EM radiation beam is shown by the dotted line 206 and is used as a trapping tweezer. As used herein, a trapping tweezer is a radiation beam that is used to hold the matter particle 212. The term 'trapping tweezer' relates to the tweezer that typically remains static in space, for example being static during the operation of the method whilst the tweezer formed by the second EM radiation moves in space. The second EM radiation beam is shown by the dashed line 208 and is used as a moving tweezer. As used herein, a moving tweezer is a radiation beam that is used to hold the matter particle 212 and may be directable to multiple positions such that the beam waist of the tweezer moves in space. The moving of the beam waist of the moving tweezer may have the effect of moving the matter particle 212. The optical tweezers in the examples of Figures 2a, 2b, 2c and in other examples herein, utilise the electric dipole interaction, which causes a matter particle in a radiation beam profile to experience a force towards a region of low potential, which may correspond to a region of high EM intensity for a red detuned scenario. The region of low potential may be at the focal point of the EM radiation beam.

The radiation beam may be more intense towards the centre of the profile, depending on the specific trapping potential of the moving tweezer being used. Both EM radiation beams 206, 208 shown in Figures 2a, 2b and 2c have a radially symmetric Gaussian potential, however, the EM radiation beams 206, 208 may have different trapping potentials. Such trapping potentials may have a lower degree of symmetry, be highly anisotropic or have multiple wells, for example. One example of another type of trapping potential is a Laguerre-Gaussian potential.

The trapping potential may depend on the frequency of the radiation beam with respect to the resonant frequency of the matter particle. The frequency of the radiation beam may be detuned from the resonant frequency of the matter particle. The equation for the detuning is provided below in equation 1:

$$\Delta \equiv \omega_{EM} - \omega_0,$$

[Equation. 1]

where $\Delta$ is the detuning, $\omega_{EM}$ is the frequency of the EM radiation beam and $\omega_0$ is the resonant frequency of the matter particle. The frequency of the first EM radiation beam may or may not be different to the frequency of the second EM radiation beam.

The depth of a potential may be considered the difference in potential between: a) a potential minimum of the potential and; b) the energy required to escape the potential minimum, i.e. the maximum kinetic energy of a matter particle that can be confined in a trap at the location of the potential minimum of the optical tweezer.

One example of detuning is red detuning, where the radiation beam frequency is below the resonant frequency of the matter particle ($\Delta < 0$). Using red-detuned radiation results in a negative potential at high EM intensities as shown in Figures 2a, 2b and 2c, where matter particles are attracted into the radiation field, and potential minima are found at positions with maximum EM intensity. In this case, the potential depth is determined by the depth of the potential minimum 214. For red-detuned radiation, a Gaussian shaped potential is one example of a potential that may be used to trap the matter particle.

Another example of detuning is blue detuning, where the radiation beam frequency is above the resonant frequency of the matter particle ($\Delta > 0$). Blue-detuned radiation can be used to create a 'bottle beam' through beam-shaping means, such as an interferometer or an SLM, for example. A bottle beam may comprise localized light-intensity minima at its foci and surrounded by regions of higher light intensity in all directions. Using a blue-detuned bottle beam results in a positive potential at high EM intensities, where matter particles are repelled out of the peaks of the radiation field, and potential minima are found in between the EM radiation field peaks hence positions with minimum EM intensity. In this case, the potential well depth is determined by the height of the repulsive walls surrounding the centre of the trap. For blue-detuned radiation, a Laguerre-Gaussian shaped potential is one example of a potential that may be used to create the bottle beam that traps the matter particle. Other suitable higher-order potentials may be used.

The trapping potentials of each EM radiation beam can superpose when spatially overlapped, forming a resultant potential 210 shown as a solid line in example 200. This superposition also occurs in example 202 and example 204. In example 200, the moving tweezer 208 has zero intensity, and therefore zero potential everywhere across space, meaning that the resultant shape of the combined potential 210 is identical to the potential 206 of the trapping tweezer.

The minimum of the potential created by the trapping tweezer is called an optical trap. An optical trap exists at an optical trap site. The optical trap site may exist at the focal point of the trapping tweezer beam. In examples discussed herein, the spatial distribution of the trapping tweezer potential preferably does not change over time, for example the duration over which the method takes place, however it will be appreciated that the trapping tweezer radiation may be controllable to change position over time.

The EM radiation beams 206, 208 are considered perfectly aligned when the minimums of each potential both have the same spatial coordinates. When this occurs, the potentials superpose constructively to form a deeper potential, 210 as shown in Figures 2b and 2c. When not perfectly aligned, the superposition may still be constructive, but not maximally constructive. This non-perfect alignment is not shown in Figures 2a, 2b or 2c.

The moving tweezer 208 may be used, for example, for moving one or more matter particles between different optical traps formed by EM radiation generated by trapping tweezer apparatus. The sequence of examples 200-202-204 in Figures 2a, 2b and 2c show an example of the method whereby the moving tweezer EM radiation 208 changes over time to 'pick up' a matter particle initially held by an optical trap of the trapping tweezer 206. In Figure 2a the method starts by aligning the centre of the moving tweezer with the spatial coordinates of the trapping tweezer's potential minimum, which is this example is also the centre of the trapping tweezer's intensity distribution. In figures 2b and 2c, the depth of the moving tweezer's potential minimum is then increased to a value larger in magnitude than the depth of the trapping tweezer's potential such that a constructive superposition of potentials takes place. Once the moving tweezer's potential is large enough in magnitude, the moving tweezer may then be spatially moved or directed, such that the matter particle is carried through space by the moving tweezer. During transit between optical traps, the resultant potential that the matter particle experiences will typically be the same as the potential of the moving tweezer, particularly when the moving tweezer spot is far from any other trapping tweezer spot. However, in the initial stages of the moving tweezer moving from an aligned position with a trapping tweezer spot, the EM intensity distributions may be unaligned but still overlap in space to an extent. In such circumstances the superposed potential minimum may have a different position to the potential minima of the two tweezers forming the superposed potential wherein the matter particle resides at the superposed minimum. Once the moving tweezer potential minimum is far from the trapping tweezer potential minimum the matter particles is carried by the moving tweezer at the moving tweezer's potential minimum.

The moving tweezer's potential is related to its intensity profile across the cross-section of the radiation beam. In the examples discussed herein, the maximum EM intensity is located in the centre of the beam, and a Gaussian potential is used with red-detuned radiation. A matter particle within the potential will experience a force directing it towards the centre of the beam, where the minimum potential is located. By varying the intensity of the moving tweezer's radiation, we can change the depth and therefore shape of the moving tweezer's potential. The intensity of the moving tweezer's radiation may be changed as a function of time, for example going from one intensity level to another higher intensity level and then back again to the initial intensity level. The switching between levels typically occurs a plurality of times of a time period. There may be two intensity levels that are switched between, for example from a minimum to a maximum EM intensity and vice versa or between multiple different intensity levels. The 'switching' indicating a transition between a higher and a lower intensity level. For example, the intensity may be varied by changing the EM intensity switching between the configurations of 200 and 202, or between 202 and 204, or between 200 and 204.

It is possible to use the switching of intensity of the moving tweezer beam to selectively eject a matter particle, dependent on certain conditions. When the frequency of the switching matches a resonance frequency for the optical trap experienced by the matter particle, the matter particle is likely to be ejected from the trapping potential of the optical trap. The resonance frequency for the optical trap depends on the mass of the matter particle 212, the size and geometry of the region of the trapping tweezer beam and the potential depth of the trapping tweezer beam. This resonance frequency may be referred to as the optical trap resonance frequency.

The optical trap may have cylindrical symmetry, and therefore there may be a resonance frequency associated with each of its two degrees of symmetry. The radial resonance frequency, associated with movement of the matter particle perpendicular to the direction of radiation propagation, is given by $\omega_r$ and the longitudinal resonance frequency, associated with movement of the matter particle parallel to the direction of radiation propagation, is given by $\omega_z$. Both resonance frequencies are defined as follows:

$$\omega_r = \sqrt{\frac{4U_0}{mw_0{}^2}} \ , \qquad \omega_z = \sqrt{\frac{2U_0}{mz_R{}^2}}$$

[Equation. 2a/2b]

Where $w_0$ is the beam waist of the trapping tweezer, $U_0$ is the trap depth, $z_R = \dfrac{\pi w_0{}^2}{\lambda}$ is the Rayleigh distance, and $\lambda$ is the wavelength of the radiation. These may also be referred to as the oscillation frequencies of the trapped matter particle. For a rubidium atom, the beam waist $w_0$ may be of the order of approximately 1 μm, the radial resonance frequency may be of the order of 100kHz, and the longitudinal resonance frequency may be of the order of 10kHz, for example 20kHz. These values may differ when a different matter particle is being trapped.

When the frequency of the switching matches the optical trap resonance frequency or is suitably close to an optical trap resonance frequency, then the matter particle may gain enough energy to escape the potential well of the optical trap. The process of repeatedly switching, or flickering, between different intensities of radiation is herein called 'stamping'. Both optical trap frequencies (radial and longitudinal) may be addressed by this stamping process. Flickering between different intensities is preferably performed at a constant frequency, but may be performed with variable frequency so long as the frequency of the stamping matches a resonance frequency of the optical trap.

When the intensity is flickered, the matter particle experiences a shallow potential well depth at a time when the beam is at a predetermined minimum intensity. In this shallow potential well, the particle may have enough kinetic energy to escape the potential well. This kinetic energy is gained from environmental heat, since temperatures of exactly 0 Kelvin are not possible, no matter how much cooling is applied to the matter particle before trapping. The more kinetic energy it has, the quicker it can move out of the trap and the more likely it is to escape. The matter particle may then experience a deep potential well depth at a time when the beam is at a predetermined maximum intensity. The flickering thus changes the potential well depth from a shallow potential well depth to a deep potential well depth and vice versa, preferably numerous times in succession.

For the application of calibrating the moving tweezer beam with the trapping tweezer beam, as discussed elsewhere herein, if the intensity is flickered at an optical trap resonance frequency and the moving tweezer is aligned with the trapping tweezer, such that the matter particle is located in the centre of the intensity-varied moving tweezer, then there is a high probability that the matter particle will be ejected. If the moving tweezer is not aligned with the trapping tweezer, such that the matter particle is not located in the centre of the intensity-varied moving tweezer, then there is a lower probability that the matter particle will be ejected from the optical trap. This occurs when the power supplied to the moving tweezer is above a certain threshold such that the potential depth of the moving tweezer is much deeper than the potential depth of the traps. It is preferable for the potential depth of the moving tweezer to be at least 10 times that of the potential depth of the trapping tweezer.

If the rate of flickering is too high or too low, i.e. not at or near an optical trap resonance frequency, then an ejection of the matter particle will not occur.

A simplified analogy for the stamping process is provided henceforth. This analogy is provided solely to aid the understanding of the reader and is not to provide an accurate mapping of the real physical processes occurring.

Consider a glass full of liquid, which is being moved back and forth. Moving the glass too slowly will not substantially move the liquid, so the liquid will never build up enough kinetic energy to escape the glass. Moving the glass too quickly with rapid oscillations will not give the liquid time to move, and thus the liquid will not build up enough kinetic energy to escape the glass. The system has a resonance frequency dependent on the size and geometry of the glass, and the viscosity of the liquid inside. Moving the glass at or near the resonance frequency will soon give rise to the liquid quickly gaining kinetic energy, rising up the sides of the glass and overflowing the rim. The size and geometry of the glass may be likened to the size and geometry of the region of first EM radiation, and the viscosity of the liquid may be likened to the mass of the matter particle. The liquid gaining enough kinetic energy to escape the glass may be likened to the matter particle gaining enough energy to escape the potential.

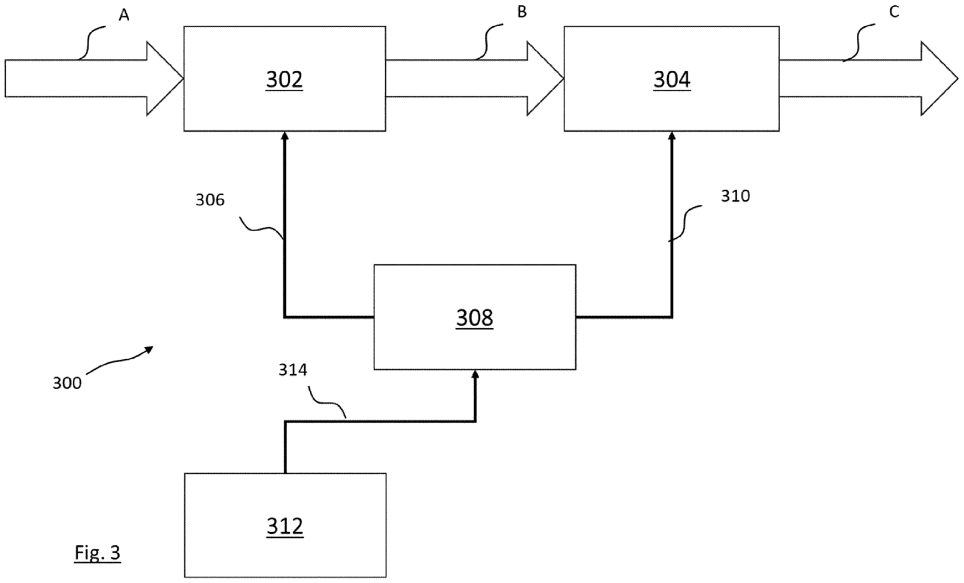

Figure 3 shows a schematic 300 detailing some components of the apparatus that may be used for moving the second EM radiation beam which forms the moving tweezer. As a schematic, the positions and configurations of the elements in Figure 3 are not supposed to imply any real-world size, positioning or configuration of features, but merely to illustrate an example of the key functioning components of a system that can be used with the methods discussed herein.

The moving tweezer beam A is generated by an EM radiation source, which is not shown in the figure. The wavelength of the EM radiation may be detuned from the resonant frequency of the matter particle. This beam is then input to a modulating means 302. The modulating means 302 may modulate at least one property of the incoming beam, for example, the intensity, phase and/or polarisation of the beam. The modulating means 302 may be any of: an acousto-optical modulator (AOM), electro-optical modulator (EOM), spatial light modulator (SLM), or other type of EM modulator. The AOM may be a fibered AOM. The modulating means 302 may adapt the depth of the moving tweezer's minimum potential so that it is deep enough to trap matter particles. Parameters that may be tuned to optimize the measurement sensitivity are the depth of the moving tweezer and the rate of the flickering.

The beam B is output from the modulating means 302, where beam B may have different modulated properties from beam A. The beam B then is input to the directing means 304. The beam may interact with at least one component, for example a lens or other bulk-optic component, before interacting with the directing means 304. The directing means may change the direction or the shape of the beam B, or a combination of both. For example, this may be done by laterally moving the second EM radiation beam such that it is translated in space. Additionally, or alternatively, the directing means may also refocus the second EM radiation beam so that it takes the same optical 'path' but has its narrowest beam waist at a shift in longitudinal position. In the example where an AOD is used, the moving tweezer's angle of refraction is changed as it leaves the AOD, causing the beam to take a different optical path. Any other suitable means of directing the second EM radiation beam may be used.

The directing means 304 may be an acousto-optical deflector (AOD), electro-optic deflector (EOD), a mechanism to translate the beam source or any other suitable alternative. It may be chosen that the directing means does not change the direction or shape of the incoming B.

The beam C is output from the directing means 304, where beam C may have a different shape from beam B, or beam C may be travelling in a different direction from beam B, or a combination of both. The beam C may then interact with at least one component before being directed to a desired position. The desired position may intersect with a matter particle or an intersection with a plane on which a plurality of matter particles are positioned.

The modulating means 302 may be controlled or driven by a modulating control signal 306, for example an electrical signal. The modulating control signal may originate from a control system 308. The control system may comprise a signal generator. The control system 308 may be a fast programmable control system, operating in real time. The control system may comprise, for example, a computer, a processor, a microcontroller, etc. For example, if the modulating means were an AOM, the control system may send a radio frequency signal to the AOM that specifies the desired power $P_{RF}^{AOM}$ of the beam B. The power of the beam is proportional to the intensity of the beam, and therefore the power of the beam is related to the depth of the potential of the beam. Therefore, an increase in power $P_{RF}^{AOM}$ will increase the magnitude of the depth of the potential. For example, an increase in power of a red-detuned beam will result in a lowering of the potential minimum, increasing the magnitude of the depth of the potential. For example, an increase in power in a blue-detuned bottle beam will result in a raising of the potential maxima. For a position between the potential maxima, the required potential to overcome the adjacent potential maxima will be larger than before the increase in power, therefore corresponding to an increase in the magnitude of the depth of the potential.

The directing means 304 may be controlled or driven by a directing control signal 310, which may be an electrical signal. The directing control signal may originate from a control system 308. The directing control signal may originate from a signal generator. The control system may comprise the signal generator. The signal generator or control system may be the same or different from the signal generator or control system that supplies the modulating control signal 306 to the modulating means 302.

For example, if the directing means 304 were a 2D AOD, the control system 308 may send radio frequency signals 310 to the AOD that specify the desired acoustic frequencies $f_{RF}^{x}$ and $f_{RF}^{y}$ of the 2D AOD that are used to control the direction of beam C. The acoustic frequencies may be proportional to the displacement of the position of the intersection of the beam C with a plane, where zero displacement indicates the position of the intersection of the beam C with a plane when no frequencies have been provided to the 2D AOD. The plane may or may not be a focal plane of the beam C.

There may be an imaging means 312 provided. The imaging means may be an electron-multiplying charge-coupled device (EMCCD), a charge-coupled device (CCD) or any suitable alternative. The imaging means may detect fluorescence of a matter particle. To induce fluorescence, a further EM source (not shown) may be provided that produces EM radiation of a frequency that is substantially similar to the resonant frequency of the matter particle. For example, if the resonant frequency of the matter particle is $f_0$ and the width of the transition to induce fluorescence is $\Gamma$, then the frequency used to induce fluorescence, $f$, may be:

$$f_0 - \Gamma \ \leq \ f \ \leq \ f_0 + \Gamma$$

[Equation. 3]

In an example where the matter particle is rubidium, $f_0$ may be 384THz and $\Gamma$ may be 6MHz. Thus, for a rubidium atom, the wavelength of the further EM radiation may be substantially 780nm. The frequency of the further EM source may be such that the EM radiation generated imparts enough energy to the matter particle to excite it enough so that it can fluoresce, but not enough such that it escapes the potential of the optical trap.

The control system may receive image data 314 from the imaging means in order to analyse an image. The control system may then analyse the image to detect the presence of matter particles, and their positions if they are present. The control system may then apply an algorithm to compute new parameters of the beam, such as the direction of the beam or intensity of the beam, for example. The instructions to change parameters of the beam may be sent to micro-controllers in the control system via serial port communication. The micro-controller program may then convert these instructions into a series of voltage sweeps to control the modulating and directing means. For example, the voltage sweeps may be used to control the RF drivers driving the 2D AOD. Only one voltage sweep may be required depending on the chosen parameter to be changed.

The algorithm may determine that different parameters are required to be changed at different times. For example, the control system may determine that a matter particle is to have stamping applied to it. The control system may supply the modulating means with a modulating control signal to decrease the intensity of the beam from a predetermined value to another, lower predetermined value. The control system may then supply the directing means with a directing control signal to direct the beam to another position, for example, the position where the beam intersects a matter particle. The control system may then supply the modulating means with a modulating control signal or plurality of modulating control signals to vary the intensity at a predetermined rate for a predetermined number of times. It will be appreciated that this example is not limiting, and any parameter may be changed and in any order with respect to other parameters depending on the chosen function of the apparatus.

The depiction of separate boxes in Figure 3 is not intended to limit the compartmentalisation of functions for each of the components; for example, the source, amplitude modulating means, directing means, control system, etc. may all be the same component, or they may be subcomponents within a component, or any combination suitable herewith.

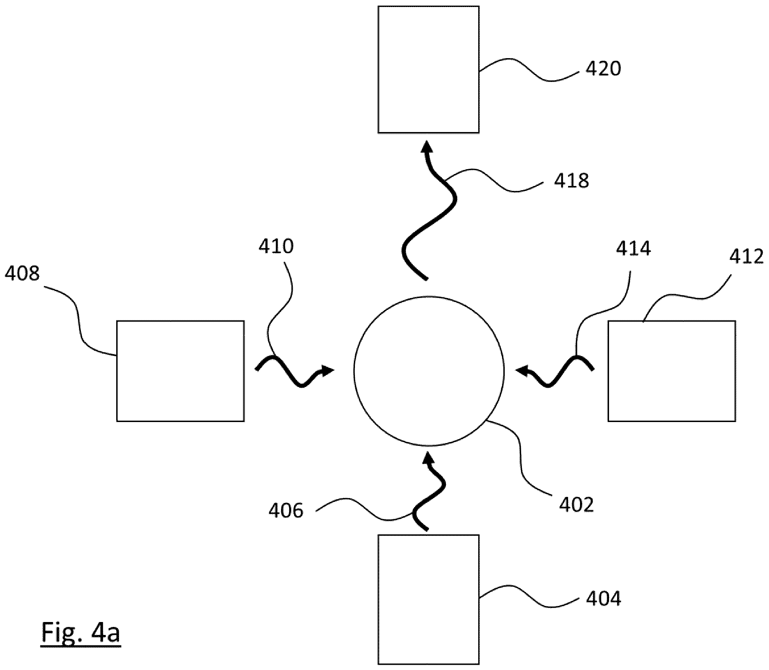

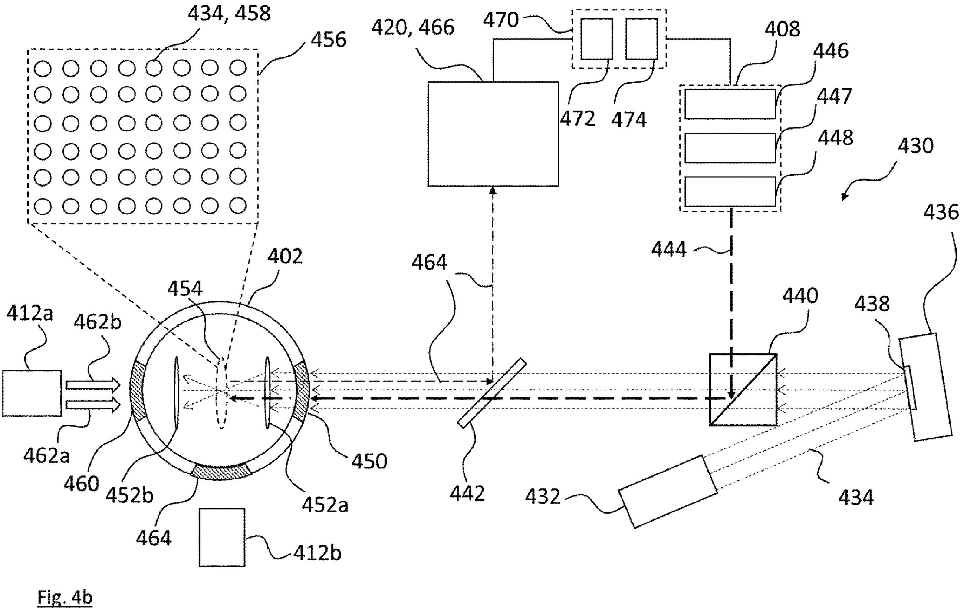

The stamping method may be enacted by an apparatus, a system of components, a device or a plurality of devices. Figure 4b shows a schematic of a set-up for a neutral atom quantum computer. The set-up may be referred to as a 'quantum computing system'. Despite being a set-up for a quantum computing system, quantum computing is merely one application of the stamping method disclosed herein, and it will be appreciated that this apparatus, with optional components added or removed, may be used to facilitate other applications. The moving tweezer apparatus of Figure 3 previously discussed may be incorporated into the stamping method apparatus of Figure 4a and Figure 4b.

Example of a stamping system set-up

Figure 4a is a simplified schematic of an example of a neutral atom quantum computer. As a schematic, the positions and configurations of the elements in Figure 4a are not supposed to imply any real-world size, positioning or configuration of features, but merely to illustrate an example of the key functioning components of a system that can be used with the methods discussed herein.

In Figure 4a, a chamber 402 is provided that may accommodate a matter particle or plurality of matter particles. The matter particles are unbound to other matter particles in the ensemble, for example, by being in a gaseous matter state. Matter particles used in the chamber 402, for trapping and positioning may be any suitable matter particle, for example, but not limited to any of an atom or group or atoms, an ion or group of ions, a molecule or group of molecules. The matter particle could be a biological cell such as a bacterium or human red blood cell for example. The matter particle may be a dielectric particle or group of dielectric particles.

An ensemble of the matter particles may be held by a holding apparatus 404. The holding apparatus 404 acts to isolate each individual matter particle such that each matter particle, in the ensemble, is held in a different point in space (to the other matter particles of the ensemble) within the chamber 402. The term 'isolate' in this context means that the matter particles are physically held away from each other, in space, and do not nominally interact with adjacently held matter particles of the same ensemble. There may be a pattern of spatially separated traps. The pattern may be an array of regular or irregular spaced traps. The pattern may be 1D. The pattern may be 2D insofar that the traps in the pattern all align along one plane. The pattern may be 3D. An example of a set of traps is a 3D array of traps spaced periodically in all of X, Y and Z dimensions, for example a 3D grid. Other patterns are also possible. The spacing in one spatial dimension may be the same or different to the other spatial dimensions.

The holding apparatus 404 may act to maintain the matter particles in their respective stationary positions using optical traps, and optionally additional different mechanisms including, but not limited to, magnetic traps. The holding apparatus 404 may provide a plurality of trap sites wherein, when first activated to output/create the traps, some trap sites are filled by one or more matter particles whilst other trap sites are vacant. Preferably the holding apparatus 404 is configured to present trap sites that hold only one matter particle. In Figure 4a we assume that the holding apparatus 404 uses one or more electromagnetic radiation beams, such as optical signals 406, that are input into the chamber 402 to affect the optical traps. The electromagnetic signals may be any suitable wavelength detuned from the resonant wavelength of the matter particle. For a rubidium atom, the suitable wavelength may be including but not limited to 800-1500nm, more preferably 820 - 880nm. Figure 4a shows the holding apparatus 404 being external to the chamber 402, however, the holding apparatus 404 may form part of the chamber 402 or be inside the chamber 402. Although only a single holding apparatus 404 is shown in Figure 4a, it is envisaged that more than one holding apparatus 404 may be used. The holding apparatus 404 generates the first EM radiation beam or first EM radiation beams.

A directing means 8 is also shown in Figure 4a. The directing means 408 is an apparatus that is able to controllably move one or more held matter particles from one spatial position to another spatial position by directing the second EM radiation beam. For example, the directing means 408 may move a matter particle trapped in one of the trap sites to another different trap site. Figure 4a shows the directing means 408 being external to the chamber 402, however, the directing means 408 may form part of the chamber 402 or be inside the chamber 402. Furthermore, the directing means 408 and holding apparatus 404 may be part of the same device or system for holding and moving the matter particles. The directing means 408 may use electromagnetic signals such as optical signals to manipulate the position of the matter particle, and optionally additional different technologies including, but not limited to, moving the atoms using magnetic signals. The electromagnetic signals may be any suitable wavelength detuned from the resonant wavelength of the matter particle. For a rubidium atom, the suitable wavelength may be including but not limited to 800-1500nm, more preferably 820 - 880nm. In Figure 4a we assume that optical signals 410 are used such as, but not limited to optical tweezers. Although only a single directing means 408 is shown in Figure 4a, it is envisaged that more than one directing means 408 may be used.

An imaging means 420 is also shown in Figure 4a. This imaging means 420 is used to monitor electromagnetic signals 418 output from the matter particles in the chamber 402. This imaging means may comprise a camera. The camera may be used to image the fluorescence output by the matter particles held by the holding apparatus 404. To induce fluorescence, a further EM source (not shown) may be provided that produces EM radiation of a frequency that is substantially similar to the resonant frequency of the matter particle.

The camera may comprise a CCD or EMCCD. Figure 4a shows the imaging means 420 being external to the chamber 402, however, the imaging means 420 may form part of the chamber 402 or be inside the chamber 402.

The apparatus may, in one example, be used for quantum computing. In this example, the matter particles are atoms, which are of the same element and hence are, from a chemical standpoint, identical when no external interactions are imposed upon them. Atoms used in the chamber 402, for trapping, positioning and atomic-state-manipulating may be any suitable atom, for example, but not limited to, any of Rubidium, Caesium, Strontium and Ytterbium. Other examples of particular elements or element groups are discussed elsewhere herein. Preferably the atoms used are those having one or two valence electrons such as alkali metals and alkali earth metals however others may also be used such as rare earth elements.

The term 'isolate' in the context of the holding apparatus 404 means that the matter particles are physically held away from each other, in space, and do not nominally interact (when in a non-excited atomic state). If the atoms are acted upon by an input stimulus such as, for example, an electromagnetic signal of one or more photons, held atoms may interact with other held atoms using particular physical effects such as, but not limited to the Rydberg blockade.

An atomic state actuator 412 is also shown in Figure 4a. This atomic state actuator 412 outputs one or more signals to control and manipulate the atomic states of one or more of the atoms in the chamber 402, preferably the trapped atoms, i.e., it actuates the transition between atomic states. The signals output by the atomic state actuator 412 are electromagnetic signals 414 of one or more photons. Different signals may be output by the atomic state actuator 412 including signals at different wavelengths. Each wavelength may correspond to (i.e., be resonant with) a different atomic transition. Although only a single atomic state actuator 412 is shown in Figure 4a, it is envisaged that more than one atomic state actuator 412 may be used. For example, a first atomic state actuator 412 may output a different wavelength or set of wavelengths than a second atomic state actuator 412. The atomic state actuator may facilitate the transition between atomic states of a single trapped atom or a plurality of trapped atoms. For example, two or more, three or more, trapped atoms, or all of the trapped atoms. Figure 4a shows the atomic state actuator 412 being external to the chamber 402, however, the atomic state actuator 412 may form part of the chamber 402 or be inside the chamber 402. The electromagnetic wavelength for transitioning a rubidium atom to the Rydberg state may be 297nm. The electromagnetic wavelength for transitioning a Caesium atom to the Rydberg state may be 318.6nm. The electromagnetic frequency for transitioning a rubidium atom between hyperfine states may be 6.835 GHz. The electromagnetic frequency for transitioning a Caesium atom between hyperfine states may be 9.192 GHz. The excitation from the ground state to the Rydberg state may be facilitated by two-photon absorption. This may be accomplished using two different EM sources such as lasers or other EM sources. These two EM sources may have different wavelengths.

Preferably any electromagnetic signals used to trap and move the atoms are preferably different, at least in wavelength, to the optical signals used to manipulate the quantum states of the atoms. In particular, any electromagnetic signals for trapping and moving the atoms are preferably off-resonance, i.e., the wavelength of the holding and positioning electromagnetic signals do not act to excite the atom between different atomic states.

An example of the general operation of the neutral atom quantum computing system may be as follows, wherein any of the following steps may be omitted, combined, rearranged in order, or adapted using features from other examples herein. Furthermore, other steps may be included before, at the same time, or after any of the steps listed below.

A) Firstly, the holding apparatus 404 emits signals into the chamber 402 to create a plurality of optical traps.

B) Some of the ensemble of atoms in the chamber 402 are automatically trapped by the plurality of traps.

C) The directing means 408 is then optionally used to move some, or all, of the trapped atoms between traps so that at least a particular set of the traps are each filled by an atom. This set of traps may be referred to as a 'register'. The imaging means 420 may be used in this process to help identify which traps are occupied or vacant. In some examples the directing means may not be required.

D) The atomic state actuator 412 outputs one or more electromagnetic signals 414 to control atomic state transitions of at least one of the atoms. This step may be performed a plurality of times to implement processing operations of the quantum computer, for example, time-sequentially inputting a plurality of electromagnetic signals to implement quantum logic gate operations.

E) The imaging means 420 is used to determine the atomic states of the atoms after the signals in step D) have been performed.

The quantum system may be re-set by at least removing the traps. The quantum system may then be re-initialised for a further quantum computation by repeating steps A)-E) above for a further time period.

Any features described above in the above general example of a stamping system set-up of Figure 4a, including but not limited to: the matter particles used; the directing means 408; the holding apparatus 404; the imaging means 420; (the atomic state actuator 412 within the example of a quantum computer); the general operation; may be used with any other example presented herein.

Detailed example of a stamping system set-up

Figure 4b shows a specific example of a stamping system setup 430 wherein the chamber 402 is a vacuum chamber and a dilute atomic vapour is formed inside the chamber 402. The chamber 402 is an ultra-high vacuum system operating at room temperature, however other environmental temperatures may be formed inside the chamber 402. Figure 4b is a more detailed example of Figure 4a wherein like references in the figures represent like components. This set-up may be adapted according to any teaching herein including, but not limited to, the features described above for Figure 4a. The set-up in Figure 4b may also be referred to as a 'quantum processor' or 'quantum system' when the matter particles are atoms and at least one atomic state actuator 412 is present. It is to be understood that the example in Figure 4b is just one example of a set-up for a stamping system and provides a 2D array of optical trapping sites, however other set-ups may be used, for example to implement a 3D array of trapping sites by including a plurality of the below-mentioned components and different component locations and/or configurations. If desired, only one optical trapping site may be created. The example in Figure 4b may also be adapted by removing components, adding components, combining components and re-positioning components.

In Figure 4b a laser system 432, comprising a laser and beam-expanding optics, outputs a cross-sectionally-wide collimated laser beam 434 towards a spatial light modulator (SLM) 436. The SLM 4436 and the laser system 32 being equivalent to the holding apparatus 404 in Figure 4a. The SLM 436 comprises a 2D periodic array of controllable deformable mirrors 438 which receive the collimated beam 434 and selectively reflect portions of the beam 434 towards a polarising beam splitter (PBS) 440. The SLM 436 outputs an adjustable phase pattern on the light 434, that in turn gets converted into an intensity pattern 458 by first lens 452a, as described later. The polarisation of the reflected portions of the beam 434 pass through the PBS 440 and propagate towards a dichroic mirror 442. It is understood that the laser system may have other components such as a polarisation rotator (not shown) for controllably adjusting the polarisation of output light 434 incident upon the SLM 436, so that the polarisation of light 434 is aligned to the transmission axis of the PBS 440.

The PBS 440 also receives EM radiation beams 444 from a directing means 408 comprising a laser 446, an acousto-optic modulator 447 and a 2D acousto-optic laser beam deflector 448 that receives laser light from the laser 446 via the acousto-optic modulator 447 and controls the direction of the laser light into the PBS 440. In turn, this allows the deflector 448 to use the laser light 444 as an optical tweezer or an array of optical tweezers. The light 444 output from the directing means 408 is reflected by the PBS 440 such that it is output from the PBS 440 along a substantially similar path to the light 434 output from the PBS 440 that originates from the laser system 432. The light beams 434 and 444 may at least partially overlap in space when output from the PBS 440. The light 444 originating from directing means 408 that is reflected and output by the PBS 440 is incident upon the dichroic mirror 442.

It is noted that the position and direction of light rays in Figure 4b, such as beams 434 and 444, are shown spatially separate to each other, however this is merely for purposes of visual clarity in the Figure and may not represent the beam positions in practice.

Both the light 444 and 434 output from the PBS pass through the dichroic mirror 442 and are incident upon window 450 of the chamber 402. The window 450 may be one of a plurality of windows in the chamber that are at least partially transparent to the wavelengths of the light that are incident upon them that are generated by the electromagnetic sources of the system 430. The window 450 forms part of the body of the chamber 402 and is sealed with respect to the walls of the chamber such that the chamber 402 holds a vacuum environment within it. Other components may be associated with the vacuum chamber 402 by either being inside the chamber 402, integrated with the chamber 402 or immediately surrounding the chamber 402 insofar that the components may input stimuli into the chamber 402, such as electromagnetic fields or magnetic fields. One or more magnetic coils (not shown) may be included about the chamber 402 to provide a spatially-varying magnetic field that, with the laser light 434, acts to provide a magneto-optical trap (MOT). The laser light 434 may have a wavelength configured to cool the matter particles via the mechanism of doppler cooling. The laser light used for doppler cooling may originate from a source other than electromagnetic source 432. The MOT system may be isolated from the optical system used for trapping and moving matter particles in the trapping area 454. The light 434 may be split and/or reflected by other optical components (not shown) to provide a plurality of beams propagating along different directions that intersect the trapping area 454. Such beams may be used to provide cooling in a plurality of directions such as along X, Y, and Z cartesian axes. Further laser light beams from one or more further sources may be used to cool and trap the matter particles. The coils may comprise two coils in an anti-Helmholtz configuration that are used to generate a weak quadrupolar magnetic field to facilitate, with the laser light 434, the magneto-optical trap. The system may use different forms of trapping mechanisms and associated equipment to trap the matter particles, as known in the art, for example, but not limited to any of the trapping and cooling systems described in: "Harold J Metcalf and Peter van der Straten. Laser cooling and trapping of atoms. JOSA B, 20(5):887-908, 2003" the entire contents of which are included herein by reference. Other cooling means may be used alternatively or in combination such as, for example, using a Zeeman slower. The atoms trapped for the method/system described herein are preferably, but not exclusively, Rb-87.

Inside the chamber 402 are a pair of convex lenses 452a, 452b. The first lens 452a is positioned to receive light beams 434 and 444 passing through the window 450 and focus them both onto a trapping area 454 of minimum beam waist (i.e., at the focal plane of the lens 452a).

The second lens 52b is located on the opposite side of the focal plane and captures light exiting the trapping area 54 and focusses or collimates the light into a plurality of light beams that may be incident upon: a beam dump inside the chamber 402 (not shown) or another chamber window 460 that allows the light to escape the chamber 402.

An expanded view 456 of the focal plane in area 454 is also shown in Figure 4b wherein an array of optical trapping sites 458 are shown that are created from the mirrors 438 of the SLM 436 reflecting portions of the light 434.

There is a control system 470 configured to provide control input signals to directing means 408. The control system 470 may comprise a signal generator 474 and a processor 472. In this example, the signal generator is a direct digital synthesizer. The imaging means 420 may supply the control system 470 with data so that the control system 470 may process the data in order to provide new control input signals to directing means 408.

Figure 4b further shows two atomic state actuators 412a/b that take the form of lasers that may output light for manipulating the states of the atoms trapped at the trapping sites 458. These are used in the example of a quantum computer. In Figure 4b, actuator 412a is a system comprising two lasers, each laser outputting light 462a/b at two different wavelengths, wherein the different wavelengths match different atomic transitions of the atomic system (or 'ensemble') held in the chamber 402. The light from the actuator 412a is incident upon a chamber window 460, through which the light travels and is incident upon the second lens 452b. The lens 452b, in turn focusses the light onto the atoms in the trapping sites 458. A further atomic state actuator 412b is shown positioned, about the plan view of the chamber 402, orthogonally to the first actuator 412a. This second actuator 412b may be substantially similar to the first actuator where a further chamber window 464 allows light output from the second actuator into the chamber 402. The second actuator 412b may be used to help address and manipulate atoms, particularly when the system provides a 3D array of optical traps. The optics for focussing light inside the chamber 402 from the second actuator is not shown in Figure 4b.

It is to be understood that Figure 4b and its accompanying description is an example of a setup for a stamping system, and when the atomic state actuators are present and the matter particles are atoms, the setup may refer to a neutral atom quantum computer. The atomic state actuators 412 may be positioned in different locations, including inside or outside the chamber 402 or part of the chamber 402. There may also be one or a plurality of different actuators 412. The actuators 412 may be integrated or otherwise co-located with other electromagnetic sources such as the laser 446 or laser system 432. It is also to be understood that the stamping system 430 may include other optical or electronic components and/or configurations to allow the matter particles to be addressed by the different electromagnetic sources.

Light, for example fluorescence, emitted by the trapped matter particles may be output from the chamber 402 through any of the windows 450, 464, 460. In Figure 4b, the light 464 emitted from the trapped matter particles travelling out of the window 450 is, prior to exiting window 450, collimated by the first lens 452a. This light 464, once exited window 450, is incident upon the dichroic mirror 442. The mirror 442 reflects the emitted light 464 towards a camera 466 (which is equivalent to the imaging means in Figure 4a). The camera may be an electron-multiplying charge-coupled-device (EMCCD) camera. The dichroic mirror may have an edge or pass-band characteristic filter response that substantially reflects emitted light 64 but substantially transmits light 434 and 444.

Figure 4b is shown as a collection, or system, of separate components, including bulk-optic devices wherein light is propagated between components using free-space propagation. It should be appreciated that other versions of the quantum system set-up 30 may be implemented using fibre-optics or integrated optic components.

The components of the quantum system 430, such as, but not limited to, laser system 432, directing means 408, camera 466, actuators 412a/b may be controlled by a classical computer system running one or more pieces of software and/or providing manual use input through an interface to control these components. Details of classical computer system features are provided elsewhere herein.

General method

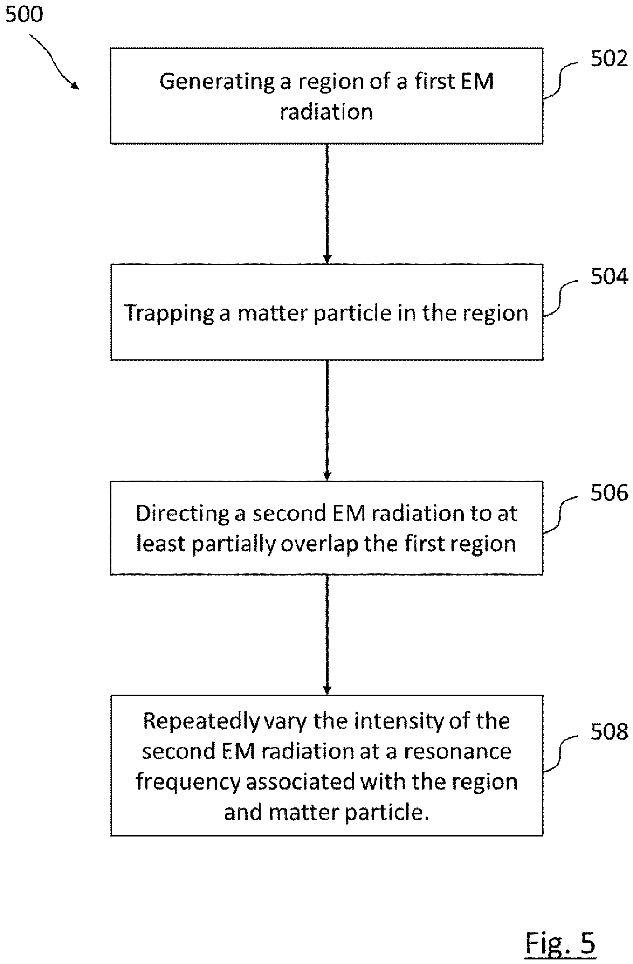

The operation of the stamping method shall now be described with reference to the flow chart 500 in Figure 5. Figure 5 shows a flow chart for a method of interacting an electromagnetic radiation beam with a matter particle. Initially, a region of a first EM radiation beam is generated, as shown in step 502. The region may be a cross-sectional area of the EM radiation beam. The region may be a volume, for example, the depth of focus of the EM radiation beam. In the previous example, the region of first radiation generated is the cross-section of the trapping tweezer radiation beam at the beam waist. The first EM radiation beam may be created by a monochromatic EM source or a broadband EM source, for example. The first EM radiation beam may be a laser or broadband radiation. The region may be generated by turning on or actuating an EM radiation source, or by modifying the configuration of a component functionally dependent on the EM radiation source, such that the modification of such configuration generates a region of EM radiation. For example, turning a mirror which has a radiation beam incident upon it in order to redirect the radiation beam to a region of space which previously did not have the radiation beam present.

In step 504, a matter particle is then trapped in the region. The matter particle may be, for example, an ion or group of ions. The matter particle could be, for example, a molecule or group of molecules. The matter particle could be a biological cell such as a bacterium or human red blood cell for example. It is to be appreciated that anything on a suitable scale may be considered to be the matter particle. In one example, such objects are roughly on the order of 1 micrometre or less. In other examples, it may be possible to trap matter particles larger than this. The matter particle may be, for example, an atom or group of atoms. The matter particle may be, for example, an alkali atom. The matter particle may be, for example, a Rubidium atom. The matter particle may be cooled down by suitable means prior to trapping. The matter particles may be cooled down by suitable means such as laser cooling and/or using a cryogenic chamber. Preferably, once the matter particle has been cooled down, it may be trapped in the first region of EM radiation beam, such that the electric dipole interaction holds the particle in place, forming an optical trap. The matter particles may be held substantially at the focal point of the beam in a fixed axial position by radiation pressure created due to the electric dipole interaction of the matter particle with the radiation beam. Multiple matter particles may be cooled at once, such that the chance of one matter particle becoming trapped in the region of first EM radiation beam is increased.

In step 506, once a matter particle has been trapped in the region, a second EM radiation beam is directed to at least partially overlap the first region. A full overlap is considered to also be at least a partial overlap. As discussed elsewhere herein, the second EM radiation beam may be referred to as the moving tweezer.

In step 508, the intensity of the second EM radiation beam is repeatedly varied at a resonance frequency associated with the first region, the matter particle, and first EM radiation intensity. There may be a radial resonance frequency and a longitudinal resonance frequency associated with the trap. Therefore, an optical trap created by the first EM radiation has associated two main resonance frequencies that are dependent on the mass of the matter particle, the potential depth of the first EM radiation, and the size and geometry of the region of first EM radiation beam. These may be referred to as the optical trap resonance frequencies. There may exist optical trap resonance frequencies above and below the main optical trap resonance frequencies, which are close enough to the optical trap resonance frequencies to also be suitably effective for stamping. The variation of the intensity of the second EM radiation beam may be controlled by providing signals to the intensity controlling means. The means are referred to as modulating means in Figure 4, and may be an acousto-optical modulator (AOM). The signals may indicate a maximum and minimum intensity. The signals may indicate a period and frequency for the variation of intensity. The signals may indicate a predetermined number of pulses. The signals may indicate a rise time and/or a fall time.

The matter particle may be ejected from the optical trap when the frequency of the intensity flickering matches one of the resonance frequencies for the optical trap.

The method of Figure 5 has many applications, some examples of which shall be discussed later. The parameters used for the stamping may vary depending on the desired application.

The principle of flickering the intensity of a single radiation beam in order to eject a matter particle from an optical trap created by that single beam, is known in the art. However, unlike the present disclosure, the tweezer of the prior art that has its intensity varied is the same beam trapping the matter particle. This process ejects a matter particle trapped inside the trapping beam potential; however, it requires modulating the intensity of the beam at a rate that is typically not feasible by an SLM. To modulate the trapping beam at the desired ejection frequency, a further modulator would typically be required that acts on all of the trapping beams. Thus, in order to eject one matter particle, all the trapping tweezer beams would need to be modulated. A method of ejecting the matter particle without changing the parameters of the trapping beam may therefore be desired.

The disclosed method has the benefit of introducing a second EM radiation beam which is varied in intensity, overlapping the first EM radiation beam. This may allow the first EM radiation beam that traps the matter particle to remain unchanged whilst a second EM radiation beam, directed to overlap the first EM radiation beam, has its parameters changed in order to eject the matter particle. If there are a plurality of trapping beams with a plurality of matter particles, then the moving beam can selectively eject a matter particle from any of the trapping beams.

Method for alignment calibration

There are many applications for using the disclosed method of stamping. The first example is the calibration of the alignment of the two EM radiation beams. There are many reasons why the two tweezers may not be aligned; for example, chromatic aberration may cause radiation of different frequencies to refract differently through a lens, resulting in the radiation beam being at an unexpected position. In many applications of optical tweezers, it may be important for the first EM radiation beam and second EM radiation beam to be properly aligned. For example, in neutral-atom quantum computing the second EM radiation beam is a moving tweezer, and it should preferably be properly aligned with the trapping tweezer in order to hold the atom. If the moving tweezer is moving the atom to another trap, then it is also important that the moving tweezer is aligned with the further trap. It will be appreciated that the process of aligning a moving tweezer with at least one trapping tweezer is not limited to the art of quantum computing, and that moving matter particles between multiple optical traps may have many applications.

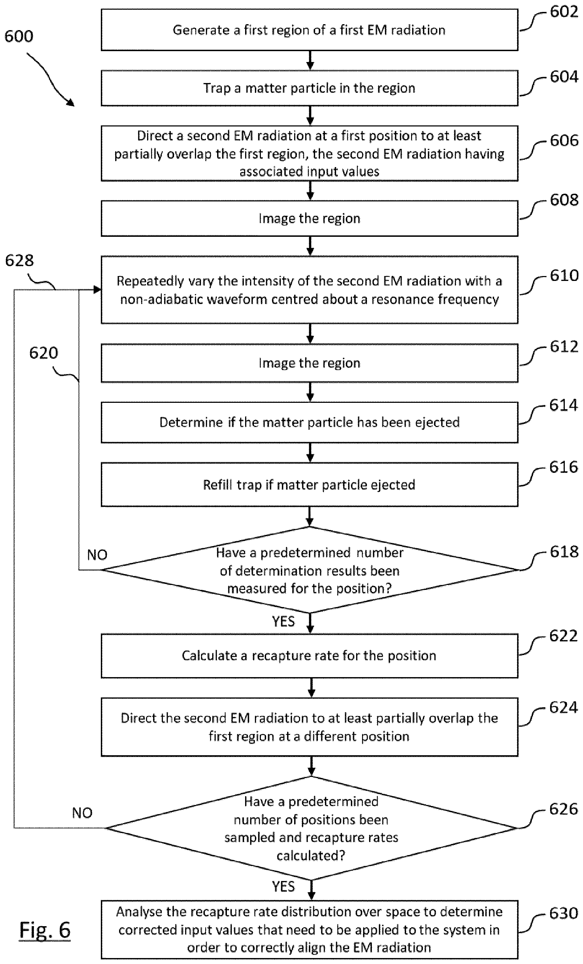

Figure 6 shows a flow chart 600 of an example of a method for calibrating the positional alignment a moving tweezer with a trapping tweezer. The method shown in Figure 6 starts with steps similar to that described above for Figure 5, but then describes further optional steps.

A region of a first EM radiation is generated, as shown in step 602. In this example, the region of first radiation generated is a 2D cross-section of the trapping tweezer radiation beam at the beam waist, however it should be appreciated that the optical trap generated by the trapping tweezer occupies a volume of space about the beam waist. One or more modulators are typically used to control one or more physical properties of the first EM radiation. Such controllable properties include the position of the region and the EM intensity. An example of a modulator that may be used to form one or more, preferably a plurality of optical traps is an SLM. Other modulators such as electro-optic modulators may be used together with an SLM to control the intensity of the optical traps formed by the second EM radiation. The SLM may be used to create multiple regions of first EM radiation. These further regions correspond to different spatially separated optical traps. For the purpose of this example, the discussion on the alignment calibration will focus only on one trap.

In step 604, a matter particle is trapped in the region. The matter particle may be trapped by the first region of EM radiation, such that the electric dipole interaction holds the particle in place.

In step 606, once a matter particle has been trapped in the region, a second EM radiation beam is directed to at least partially overlap the first region. A full overlap is considered to also be at least a partial overlap. The second EM radiation beam may be directed by using any suitable directing means, such as an acousto-optical deflector (AOD) or a spatial light modulator (SLM). The directing means may be directed in any suitable way; for example, the directing means may cause the moving tweezer to take a different optical path. This may be done by laterally moving the moving tweezer. In the example of using an AOD, the moving tweezer's angle of refraction is changed as it leaves the AOD, causing it to take a different optical path. The directing means may also refocus the moving tweezer so that it takes the same optical path but has the narrowest beam waist at a shift in longitudinal position.

The directing means may receive control values which determine the direction of the moving tweezer. For example, the displacement of the moving tweezer beam is controlled through variable frequency driving of the AOD. An AOD works by sending acoustic waves through a material such as glass. Light travelling through the material will be diffracted if acoustic waves are travelling through the material in a direction perpendicular to the direction of the light. The light will be diffracted in the plane of the direction of the light and direction of the acoustic waves. The angle of diffraction of the light passing through the glass is dependent on the frequency of the acoustic waves, so varying the frequency of the acoustic waves can be used to determine the position of the light as it exits the AOD. In a 2D AOD there are two different acoustic frequencies that may be used, $f_{RF}^{x}$ and $f_{RF}^{y}$, one for each degree of freedom of the outgoing light beam. The subscript 'RF' signifies that the frequencies being used are oscillating at radio frequencies. The radio frequency signal may be received from a control system external or internal to the AOD. The control system may comprise a signal generator which provides the signal to the directing means. The signal generator may be a Direct Digital Synthesizer (DDS). Other control signals exist for other directing means.

In step 608, the region may be imaged by an imaging means to determine the presence and/or location of the matter particle, producing a first image. Space surrounding the region may also be imaged. This may be performed before the intensity of the second EM radiation beam is flickered. In one example, fluorescence imaging may be used to detect the presence of a matter particle. An electron-multiplying charge-coupled device (EMCCD) may then be used to detect the fluorescence. The imaging means may be connected to the control system so that the positional data associated with the matter particle can be used later.

In step 610, the intensity of the second EM radiation beam is repeatedly varied at an optical trap resonance frequency associated with the region, the first EM radiation intensity and the matter particle. There may be a radial resonance frequency and a longitudinal resonance frequency associated with the trap. Therefore, an optical trap created by the first EM radiation has associated two main resonance frequencies that are dependent on the mass of the matter particle, the potential depth of the first EM radiation, and the size and geometry of the region of first EM radiation beam. These may be referred to as the optical trap resonance frequencies. There may exist optical trap resonance frequencies above and below the main optical trap resonance frequencies, which are close enough to the optical trap resonance frequencies to also be suitably effective for stamping.

In the examples discussed herein, the moving tweezer and trapping tweezer both have a circular Gaussian beam profile cross-section, with the maximum intensity located in the centre of the circular beam profile cross-section. Both tweezers use red-detuned EM radiation. This means that the minimum potential is located in the centre of the beam, and the tweezers may be considered aligned when the minimum potentials of both tweezers have the same spatial coordinates. In this example, the beam profile cross-sections would appear as concentric or overlapping circles when aligned. However, it is to be appreciated that the tweezers may have different shaped beam profile cross-sections with asymmetric potentials. Furthermore, the beam profile cross-sections may be different sizes.

For the matter particle to be ejected when the moving tweezer is aligned with the trapping tweezer, the variation of the intensity should be non-adiabatic. The stamping is considered to be adiabatic when the adiabatic condition is fulfilled, as given by the following equation:

$$\frac{d\omega(t)}{dt} \times \frac{1}{\omega(t)} \ll \frac{\omega(t)}{2\pi},$$

[Equation. 4]

where $\omega(t)$ is a resonance frequency related to the combined time-dependent potential depth of the trapping tweezer and the moving tweezer, $U(t)$, which is given by:

$$U(t) = U_0 + U_{MT}(t),$$

[Equation. 5]

where $U_{MT}(t)$ is the potential depth of the moving tweezer as a function of time, and $U_0$ is the potential depth of the trapping tweezer, which in preferred examples may not change with time. When the condition is fulfilled, the stamping is considered adiabatic, and the resonance frequency of the combined system of the optical trap and moving tweezer, $\omega(t)$, may change at a slow enough rate that the atom is not excited when the trapping tweezer and moving tweezer are aligned.

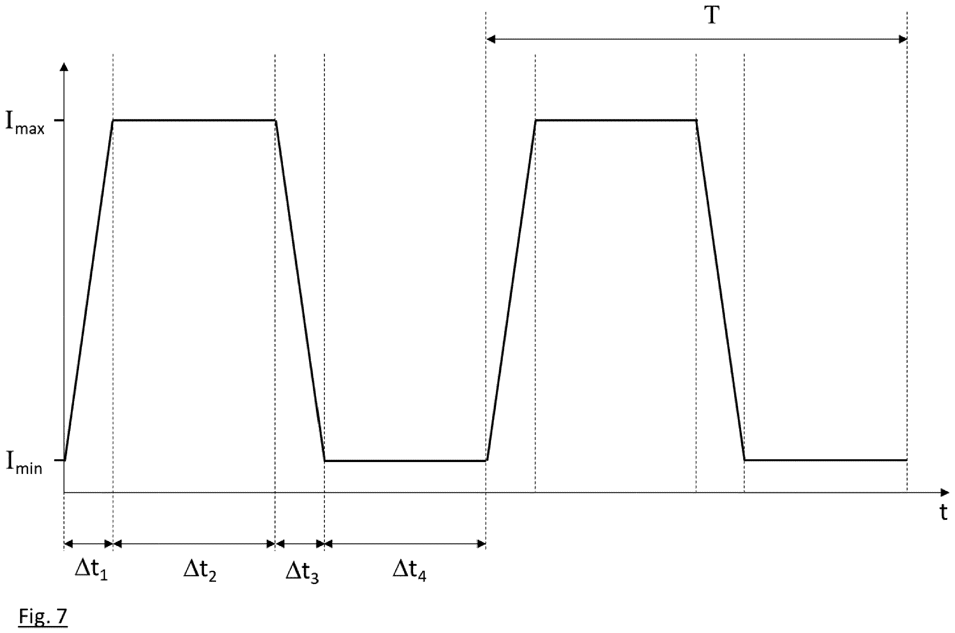

Thus, for the method of alignment calibration, the flickering of the moving tweezer's intensity is performed by varying the intensity with a non-adiabatic waveform, and the condition of Equation 4 is not satisfied. Figure 7 shows an example of a control signal used to drive the flickering / stamping of the moving tweezers. Figure 7 plots an example of the variation of intensity of two non-adiabatic second EM radiation beam pulses as a function of time, where the intensity is proportional to the control signal used to drive the flickering/ stamping of the moving tweezers. The control signal may be supplied in terms of a time-dependent voltage and may be measured with an oscilloscope. The term non-adiabatic is used to signify that the intensity of the radiation beam changes at a high enough rate that a matter particle positioned at the point of constructive potential superposition is ejected from the trapping tweezer. The frequency of the intensity flickering should preferably be substantially equal to an optical trap resonance frequency. Thus, to achieve the variation of intensity non-adiabatically whilst matching the frequency of the stamping to an optical trap resonance frequency, the difference between the maximum and minimum intensities of the waveform is preferably large enough to force a displacement of the matter particle. The variation of the intensity of the second EM radiation beam may be controlled by providing signals to the modulating means, which may control the intensity of the beam. The means may be, for example, an acousto-optical modulator (AOM) or electro-optical modulator (EOM). These signals may be provided as a waveform from a signal generator. The signals may indicate a maximum intensity $I_{max}$ and minimum intensity $I_{min}$. The maximum and minimum intensities may vary as a function of time. The signals may indicate a period T and frequency. The signals may indicate a predetermined number of pulses. The signals may indicate a rise time $\Delta t_1$ and/or a fall time $\Delta t_3$. The signals may indicate an ON time $\Delta t_2$ and/or an OFF time $\Delta t_4$. For example, the control signal may have ~1$\mu$s rise/fall time, ~4$\mu$s time ON and ~4$\mu$s time OFF.

When the beams are aligned and the matter particle (and thus the trapping tweezer) has the same spatial coordinates as the potential minimum of the moving tweezer, the flickering of the moving tweezer may cause the matter particle to be expelled. If the beams are not aligned, then the matter particle will not be affected by the flickering of the moving tweezer. The flickering may be a pulse or pulses of radiation, where the pulses last long enough so that the matter particle has time to interact with the radiation and move out of the trap. The pulses also need to be steep enough to force a displacement of the matter particle, if they are aligned. The steepness can be varied by changing the maximum and minimum intensities accordingly. To force a displacement when the two tweezers are aligned, the potential of the moving tweezer may be at least as deep as the potential of the trapping tweezer. Preferably, the potential of the moving tweezer may be greater than 10 times the potential of the trapping tweezer. The matter particle may be ejected from the optical trap when the frequency of the intensity flickering matches one of the resonance frequencies for the optical trap.

In an example where an AOM is used to control the intensity of the pulses, the control signal sent to the AOM used to drive the stamping is composed of a carrier frequency. The carrier frequency may be in a range from about 80 MHz to about 110MHz amplitude, depending on the AOM being used. The carrier frequency may be amplitude modulated by an envelope, which may comprise a pulse. The pulse may have a trapezoid waveform. The flickering may comprise a plurality of cycles of varying the intensity of the radiation, for example, between 2 to 5 cycles. In other examples, more than 5 cycles may be used. Each variation of the intensity of the radiation may be considered a pulse of the radiation. For example, in Figure 7, the waveform goes through one pulse in the period T. The frequency of the flickering may be dependent on the size of the region of first EM radiation, the potential depth of the first EM radiation, and the mass of the matter particle. In one example, for a Rubidium atom in the centre of the second EM radiation beam, the flickering frequency may be between about 10kHz and 100kHz. The flickering frequency may be 1/T, where T is the period as displayed in Figure 7.

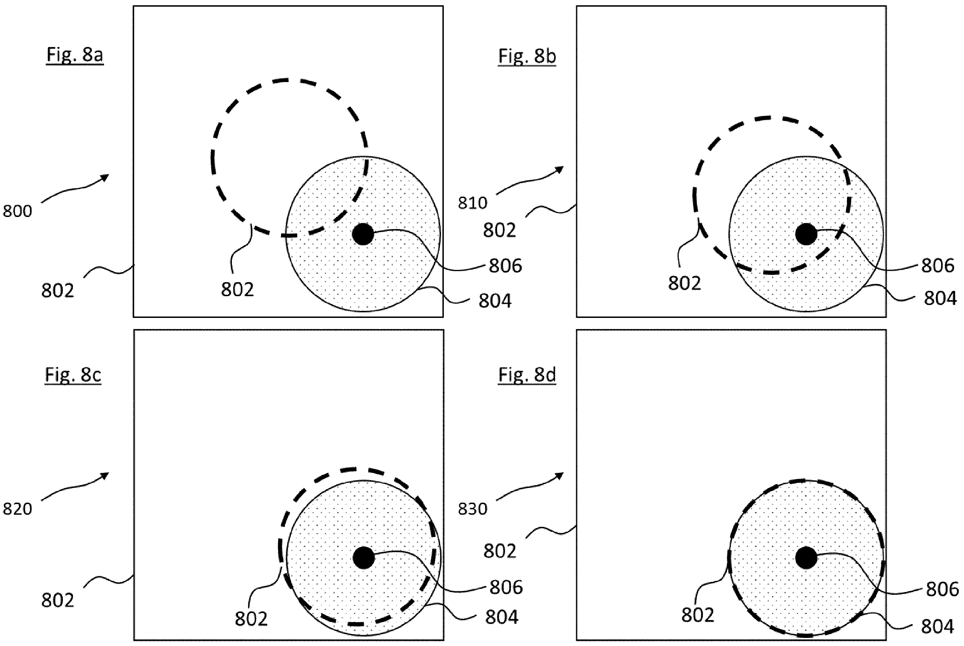

Figure 8a shows a first scenario 800 wherein there is a moving tweezer 802, and a trapping tweezer 804 which is holding a matter particle 806. The moving tweezer is located in the middle of square-shaped 'offset region' 802. The centre of the offset region 802 may be the initial position of the moving tweezer under the initial input control signals sent to the directing means. The moving tweezer may be directed to positions within the offset region 802 during the stamping. The offset region may be any shape. In 2D, the offset region may be, for example, a square, a rectangle, a triangle etc. In 3D, the offset region may be, for example, a cube, a rectangular cuboid, a tetrahedron, etc. The offset region may or may not be a shape that is able to be tessellated.

The moving tweezer is overlapping the trapping tweezer, but the overlap does not contain the matter particle. Therefore, when the flickering is applied, there will be no interaction between the matter particle and the moving tweezer, and the matter particle will remain in the optical trap created by the trapping tweezer.

Figure 8b shows a second scenario 810, wherein there is a moving tweezer, and a trapping tweezer is holding a matter particle. The moving tweezer is offset from the centre of the offset region, overlapping the trapping tweezer, where the overlap now contains the matter particle. However, the matter particle is located near the edge of the moving tweezer. Therefore, when the flickering is applied, there will be a small but negligible interaction between the matter particle and the moving tweezer. The flickering is highly unlikely to eject the matter particle, and the matter particle has a high probability to remain in the optical trap created by the trapping tweezer.

Figure 8c shows a scenario 820 wherein there is a moving tweezer, and a trapping tweezer is holding a matter particle. The moving tweezer is offset from the centre of the offset region, now with significant overlap with the trapping tweezer, and the overlap contains the matter particle. Therefore, when the flickering is applied, there will be some interaction between the matter particle and the moving tweezer. The flickering may be likely to eject the matter particle, as the tweezers are substantially aligned, but the probability of ejection will not be substantially unity. The matter particle still has a substantial probability to remain in the optical trap created by the trapping tweezer.

Figure 8d shows a scenario 830 wherein there is a moving tweezer, and a trapping tweezer is holding a matter particle, wherein the moving tweezer is offset from the centre of the offset region. The trapping tweezer and the moving tweezer are fully aligned. The moving tweezer has a substantially complete overlap with the trapping tweezer, and the overlap contains the matter particle in substantially the centre of both beam profiles. Therefore, when the flickering is applied, there will be a strong interaction between the matter particle and the moving tweezer. The flickering is highly likely to eject the matter particle, and the probability of ejecting the matter particle will be substantially unity. The matter particle has a very lower probability to remain in the optical trap created by the trapping tweezer.

Turning back to the method of Figure 6, in previous step 608 a first image was taken to determine whether a matter particle was located in the trapping tweezer. In step 612, the imaging means may be used to image the region of first EM radiation, producing a second image. This second imaging step is performed so as to determine the presence of the matter particle in the optical trap after the moving tweezer has been flickered.

In step 614, a determination may be made whether the matter particle has been ejected. The first image may be compared with the second image, and if there exists a matter particle at a location in the first image but there does not exist a matter particle at the same location in the second image, the matter particle is determined to have been ejected. If there does not exist a matter particle at a location in the first image and there does not exist a matter particle at the same location in the second image, no ejection may be determined to have taken place. If there exists a matter particle at a location in the first image and there also exists a matter particle at the same location in the second image, no ejection may be determined to have taken place.

In step 616, the optical trap may be refilled with a further matter particle if a determination has been made that the matter particle was ejected from the optical trap. The further particle may be a matter particle of the same type as the first matter particle.

In step 618, the method may be repeated from step 618 (as shown by line 620) until a predetermined number of determination results have been achieved for the same position of the moving tweezer. The position corresponds to the overlap. The determination results may be a binary determination of an ejection or no ejection. If the predetermined number of results is determined to be 1, then the method will proceed to step 622 immediately as there would be no need to repeat this procedure. The method may return to step 608 rather than step 610, as another image may be taken to confirm the presence of the further matter particle (this is not shown in Figure 6). The predetermined number of results may be any number. It may be preferable for the predetermined number of results to be five or more, preferably ten or more; possibly upper limits of measurements for the same overlap are 100, 500, 1000.

In step 622, a recapture rate may be calculated for the position. This may be generated from one or more determination results for the specified position. The recapture rate may also be known as the recapture probability. The recapture rate may be considered to be unity minus the ejection rate. The recapture rate may be considered to be unity minus the ejection probability. A high recapture rate (or recapture probability) indicates that there is a high probability for the matter particle to remain in the optical trap when the moving tweezer is directed to a given position and has the stamping procedure applied. The recapture rate is named as such as it is the rate at which matter particles are recaptured after momentarily experiencing a low potential well during the flickering of intensity. A high ejection rate (or ejection probability) indicates that there is a high probability for the matter particle to be ejected from the optical trap when the moving tweezer is directed to a given position and has the stamping procedure applied.

$$recapture\ rate = \frac{n_{remain}}{N}$$

[Equation. 5]

The recapture rate is calculated as above in equation 2, where $n_{remain}$ is the number of determination results where the matter particle remains in the optical trap, and N is the total number of determination results. The recapture rate for a position is dependent on the position of the moving tweezer. For example, in an instance where the moving tweezer's position is close to the matter particle, and five determination results are made, only one in five determination results found the matter particle to remain in the optical trap. Therefore, the recapture rate would be 0.2.

In step 624, the second EM radiation beam (moving tweezer) is directed to at least partially overlap the first region of first EM radiation at a different position to the previous position of the moving tweezer. The position may be within the offset region of the moving tweezer. The positions within the offset region may be discretised. The position may be adjacent to the first position, or it may be further away.

In step 626, the method may be repeated from step 610 (as shown by line 628) until a predetermined number of positions have been sampled and recapture rates calculated. The previous step 618, where the method is repeated until a predetermined number of determination results have been achieved for the position, is also repeated. The position corresponds to an overlap. The method may return to step 608 rather than step 610, as another image may be taken to confirm the presence of the further matter particle (this is not shown in Figure 6). The predetermined number of positions may be any number. The positions may be discretised within the offset region. The discretised positions may be spatially arranged in a grid-like arrangement, or any suitable arrangement, for example a hexagonal lattice. The positions may span the entirety of the offset region. There may be many ways of sampling the offset region, for example, in a raster scan order, a Boustrophedon (snake scan) order, a Hilbert scanning order, etc. It may be preferable for the predetermined number of positions to be 100.

If it is determined in step 626 that only one more repetition of the stamping is required, steps 616 and 624 may be skipped after the subsequent stamping. This is because if it is the last stamping procedure to be done, then there may be no immediate need to refill the optical trap with another matter particle or to direct the moving tweezer to a different position.

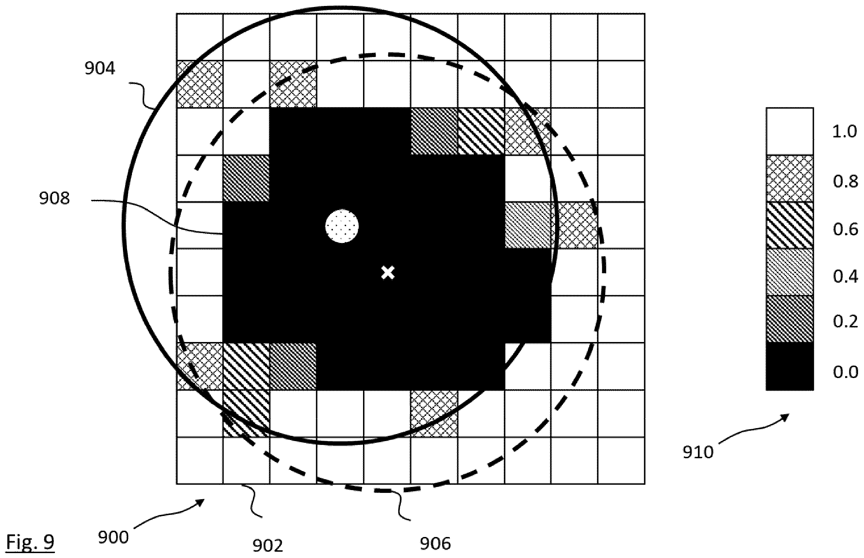

In step 630, the recapture rate spatial distribution is analysed over space to determine corrected input values that need to be applied to the system in order to correctly align the EM radiation beam. The space may be the offset region. An example of how this may be achieved is shown in Figure 9.

Figure 9 shows a recapture rate spatial distribution profile, 900, that shows the recapture rate of a matter particle as a function of the moving tweezer's position. The grid 900 is split into 100 smaller tiles 902 in a 10x10 format, although any grid arrangement may be chosen.

The trapping tweezer 904 is shown as the solid circle and the moving tweezer 906 is shown as the dashed circle. The dotted circle positioned in the centre of the black circle is the matter particle. The white cross positioned in the centre of the dashed circle is the position of the moving tweezer. The displayed position of the moving tweezer has a small spatial offset from the centre of the grid.

The grid 900 corresponds to an offset region. The offset region shown in Figure 9, when compared to the sizes of the tweezers, is smaller than the offset regions shown in Figures 8a,b,c,d, although the offset region used in determining the recapture rate spatial distribution profile may be any suitable size. Preferably the offset region is large enough such that a centred region of zero recapture rate fits entirely within the offset region. The centre of the grid corresponds to the initial position of the moving tweezer when directed using the initial control input values. In this example, the position of the centre of the grid lies on two intersecting lines, rather than in the middle of a tile.

A key 910 is provided with different hatchings to assist with the reading of the recapture rates. The key only displays 6 values of recapture rate, but in practice there may be more or less values of recapture rates than displayed in Figure 9. If enough determination results are obtained for each position, the distribution of possible recapture rates may appear to be substantially continuous. For example, Figure 9 assumes that five determination results were measured, therefore resulting in six possible discrete recapture rates.

The profile may be a map indicating recapture rate vs spatial coordinate relative to the region of first EM radiation acting as a trap for the matter particle. The profile may be generated by performing the step of directing the second EM radiation beam such that there is a different overlap with the first EM radiation beam before the step of producing further regions of first EM radiation.

In this example, the small tiles which comprise the black area 908 all have zero recapture rate. This means that in every determination result, the matter particle was ejected from the optical trap. Therefore, in this example, the moving tweezer's initial position is substantially close to the position of the matter particle.

In practice, the length-scale of the tweezer cross-sections may be orders of magnitude larger than the length-scale of the matter particle, which is not shown in Figure 9. One may look at graph 900 and determine that the moving tweezer 906 and trapping tweezer 904 do not look suitably aligned, even though the recapture rate at the position of the moving tweezer 906 is zero, indicating that the tweezers are aligned. However, this only appears this way because the length-scale of the tweezer cross-sections on the Figure are of similar magnitude to the size of the matter particle. The tweezers would appear to be aligned if their radii were orders of magnitude larger, such depictions of the example would be impractical to display on a figure.

In the discussion above, of determining recapture rates, multiple measurements of matter particle ejection were made before a new moving tweezer position was established. An alternate method for obtaining the recapture rates may be used. In this alternative method the first binary measurements of a plurality of positions in the grid may be measured before measuring further binary measurements of the plurality of positions in the grid. In other words, multiple moving tweezer positions are measured for particle ejection before further ejection measurements are made for the same moving tweezer position. For example, it may be possible to take the first binary measurements of every point in the grid before taking the second binary measurements of every point in the grid. Once a predetermined number of binary measurements have been made for a position within the grid, the recapture rate may be calculated for that position. The recapture rates may or may not be calculated once the predetermined number of binary measurements have been taken for every position. For example, the first binary measurements may be measured for a fraction, for example a quarter, of the grid before measuring the second binary measurements for the same quarter. Once a recapture rate for that fraction has been calculated, the first binary measurements of a second fraction may be measured, and the process repeated. In another example, the first binary measurements of a large fraction of the grid are measured, before second binary measurements are made on a smaller fraction within the large fraction. Further binary measurements may be made for any of the above examples. It will be appreciated that any suitable combination of taking binary measurements from different positions before calculating the recapture rate for any one position may be used.

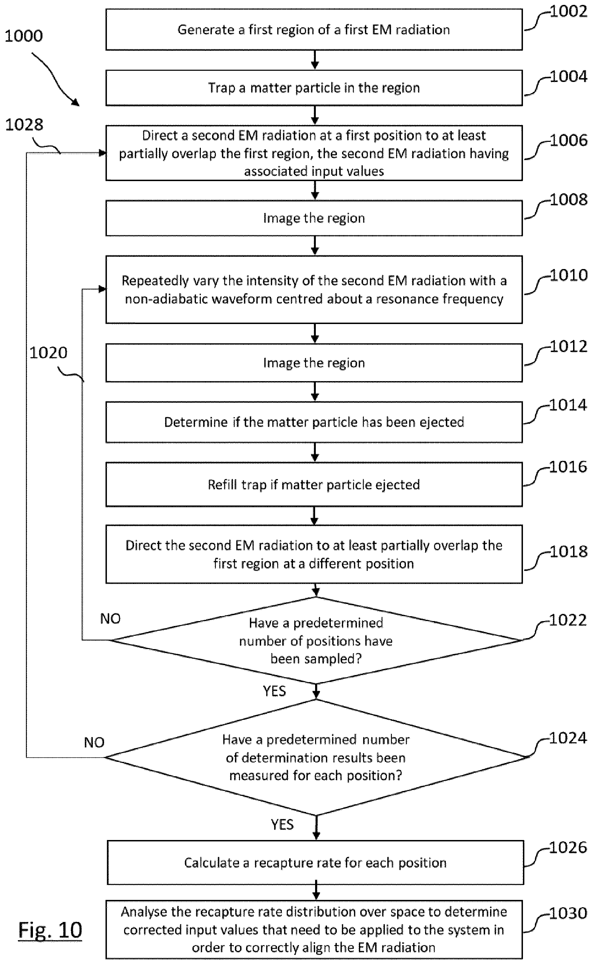

An example of the method is shown in Figure 10.

Figure 10 shows a flow chart that describes an alternate method for calibrating the alignment of the two tweezers. This method is substantially the same as the previous method in Figure 6, except that the steps 618, 622, 624 and 626 are modified slightly and performed in a different order.

In step 1018, after the stamping has been applied to a first position and a first determination result has been generated, the second EM radiation beam is directed to at least partially overlap the first region at a different position.

In step 1022, the method may be repeated from step 1010 (as shown by line 1020) until a predetermined number of positions have been sampled for determination results. Unlike step 626, the recapture rate may not be calculated for a given position before moving on to a further position.

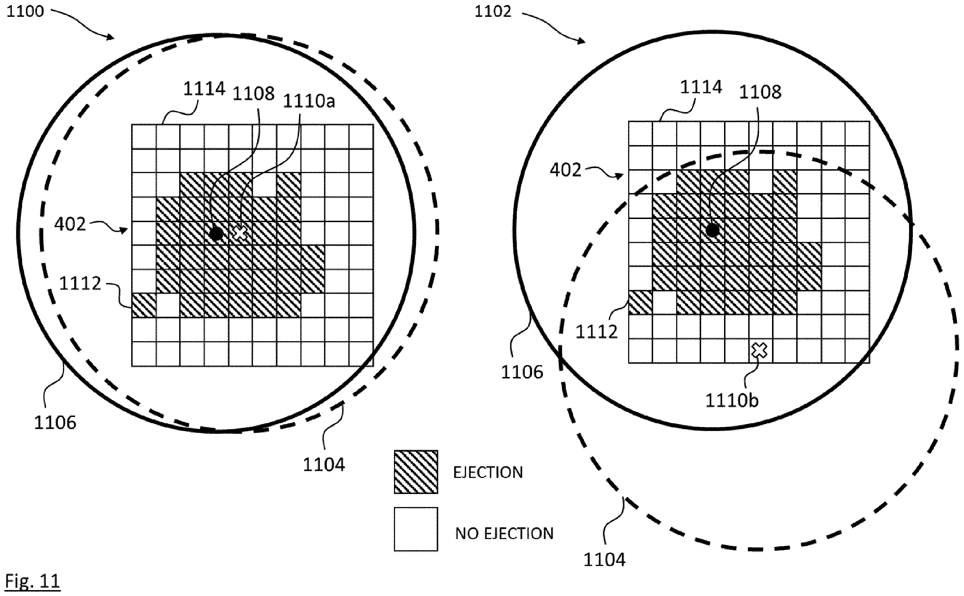

Figure 11 illustrates the result after one repeat of steps 1010 to 1018, where stamping has been applied once per position in the offset region. The two graphs 1100, 1102 show one determination result per position. Both graphs 1100, 1102 show the same determination result distribution. However, graph 1100 shows the moving tweezer 1104 almost aligned with the trapping tweezer 1106 and the matter particle 1108. Graph 1102 shows the moving laser further away from the trapping tweezer and the matter particle. The position of the moving tweezer is indicated by a white cross 1110 and the position of the matter particle is indicated by a black dot. In this example, there are 100 positions sampled in a 10x10 grid, and therefore 100 determination results.

In graph 1100, the moving tweezer 1104 is almost aligned with the matter particle 1108, and therefore the stamping causes the matter particle to interact strongly and be ejected. Therefore, when the moving tweezer is positioned at the location indicated by the white cross, close to the centre of the trapping tweezer, the matter particle may be determined to be ejected. This ejection is illustrated by the hatched pattern 1112 of the grid tile associated with the position.

In graph 1102, the moving tweezer is not aligned with the matter particle, and therefore the stamping does not cause the matter particle to interact and be ejected. Therefore, when the moving tweezer is positioned at the location indicated by the white cross 1110, further from the centre of the trapping tweezer, the matter particle may be determined to not be ejected. This non-ejection is illustrated by the solid white colour 1114 of the grid tile associated with the position.

Turning back to Figure 10, in step 1024, the method may be repeated from step 1006 until a predetermined number of determination results have been measured for each position. Step 1008 may not be performed because the optical trap may already have been refilled. The second EM radiation beam (moving tweezer) is directed back to the first position, where the stamping is carried out again to gather a second determination result for the first position. Subsequent second determination results of further positions may be gathered. Subsequent further determination results of further positions may be gathered. This method is continued until a predetermined number of determination results is measured for each position. The predetermined number of results may be any number. It may be preferable for the predetermined number of results to be five or more, preferably ten or more; possible upper limits of measurements for the same overlap are 100, 500, 1000.

It may be possible for the step 1006 to not direct the second EM radiation beam back to the first position. Instead, the second EM radiation beam may be directed to another position which has already had the first determination result measured. The second EM radiation beam may later be directed towards the first position.

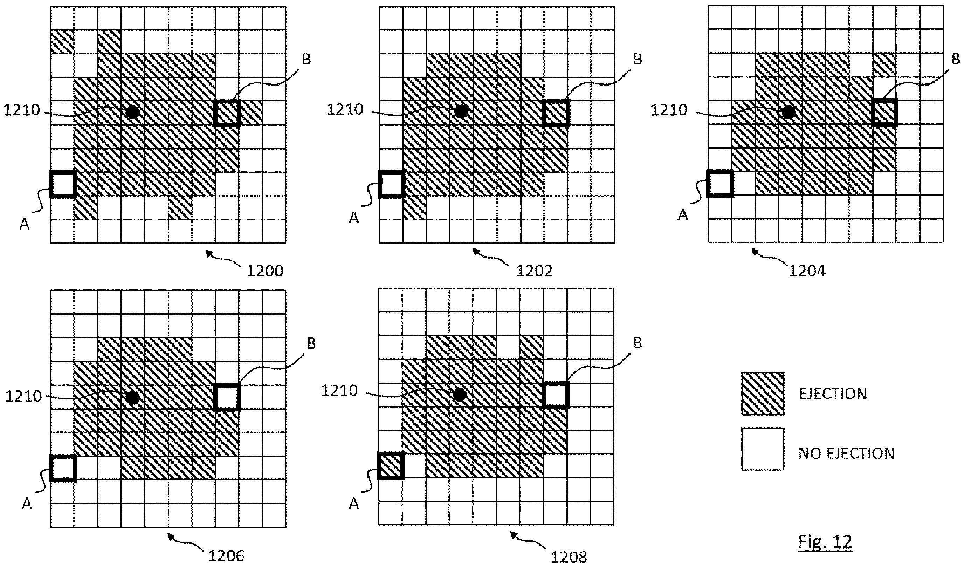

Figure 12 illustrates what the determination results of five passes 1200, 1202, 1204, 1206, 1208 of all the positions within an offset region may look like. A pass may be considered complete when the moving tweezer has sampled every predetermined position within the offset region. In the offset region of Figure 12, the small tiles with hatching represent an ejection of the matter particle and the white solid tiles represent no ejection of the matter particle. The matter particle is represented by the black dot 1210. In passes 1200, 1202, 1204, 1206 the matter particle is not ejected when the moving laser is directed at position A. The matter particle is ejected in pass 1208 when the moving laser is directed at position A.

In passes 1206, 1208 the matter particle is not ejected when the moving laser is directed at position B. The matter particle is ejected in passes 1200, 1202, 1204 when the moving laser is directed at position B. Position B is slightly closer to the matter particle than position A, therefore leading to more interaction between the matter particle and the moving tweezer during the stamping.

Turning back to Figure 10, in step 1026, a recapture rate is calculated for each position in the offset region. This is done as the same way in the previous example, wherein the recapture rate is calculated by dividing the number of times the matter particle remains in the optical trap after the stamping procedure, by the total number of times the stamping procedure has been performed. The more determination results there are for a position, the more accurate the calculation of the recapture rate for that position will be.

For example, the recapture rate for position A would be 4/5, or 0.8, signifying that approximately 80% of the time the matter particle will not be ejected when the moving tweezer is directed at this position. This means that the ejection probability is therefore 1/5, or 0.2, signifying that approximately 20% of the time the matter particle will be ejected when the moving tweezer is directed at this position.

In a further example, the recapture rate for position A would be 2/5, or 0.4, signifying that approximately 40% of the time the matter particle will not be ejected when the moving tweezer is directed at this position. This means that the ejection probability is therefore 3/5, or 0.6, signifying that approximately 60% of the time the matter particle will be ejected when the moving tweezer is directed at this position.

The ejection measurements shown and described for Figure 12 may be used to form a probability distribution of recapture rate as shown in Figure 9.

If it is determined in step 1022 that after step 1024 only one more repetition of the stamping is required, steps 1016 and 1018 may be skipped after the subsequent stamping. This is because if it is the last stamping procedure to be done, then there may be no immediate need to refill the optical trap with another matter particle or to direct the moving tweezer to a different position.

Once the recapture rates have been calculated, it may be possible to determine a corrected mapping of the moving tweezer's control input values to the position of the moving tweezer. When such corrected control input values are used to direct the moving tweezer, the moving tweezer may become aligned with the trapping tweezer. The recapture rate spatial distribution may be analysed to provide new control input values. This may be done by heuristically changing the control input values and repeating the steps of Figure 6 or Figure 10 as described above with these new control input values. A suitable algorithm may be used to change the control input values in order to minimise the number of repeated alignment calibration processes that are to be performed. The control input values may be considered to be calibrated when they minimise the de-centring of the moving tweezer beam in the grid. In the example of Figure 9, this will appear as a recapture rate spatial distribution profile with the black regions of zero recapture rate being centred substantially in the middle of the offset area. In one example, where an AOD is used to control the direction of the moving tweezer, the control input values are two frequencies used to control the acoustic frequencies $f_{RF}^x$ and $f_{RF}^y$ used to control the device. The frequencies provided to the AOD may be the acoustic frequencies $f_{RF}^x$ and $f_{RF}^y$. These may be provided by a Direct Digital Synthesizer (DDS) providing a DDS frequency to the AOD.

If there are multiple optical traps present, for example in the case where an SLM creates multiple optical traps out of one input trapping tweezer, then the above calibration method may be carried out for each trapping tweezer.

Moving tweezers are not the only type of radiation beam that can be aligned to the trapping tweezer. For example, in a quantum computer it may be desired to align an addressing beam which may be used for performing quantum computations. If the addressing beam is of a frequency suitable for trapping the matter particle, in this instance an atom, then it may be possible to align this beam with the trapping beam using the same method as above, so long as the frequency of the addressing beam is detuned from the resonant frequency of the matter particle. In this example, the addressing beam is not used for moving matter particles.

It may also be possible to repeat the calibration method for at least a further beam, making it possible for three or more beams to be aligned. In the example of a quantum computer, it may be beneficial to have the trapping beam, moving beam and multiple addressing beams all aligned.

Method for shape evaluation

Another application of the disclosed method of stamping is used to evaluate the shape of the second EM radiation beam. The cross-sectional beam profile may be Gaussian in shape if using red-detuned light with respect to the matter particle resonant frequency, where the intensity of the beam cross-section is highest towards the centre and the intensity drops off towards the edges. A Laguerre-Gaussian profile may be used to create a bottle beam if using blue-detuned light with respect to the matter particle resonant frequency, where the intensity of the beam cross-section is lowest towards the centre of the beam. Other higher order Gaussian beams may be used. However, these beam cross-section profiles may not be perfect. For example, one might expect a Gaussian beam profile which is to be circular with a high degree of symmetry, however in practice it may be elliptical with a lower degree of symmetry. This may be caused by effects arising from the nature of the EM source, effects arising from the optical path of the second EM radiation beam changing, or from effects arising from defocussing of the second EM radiation beam through a focal lens, to name a few examples. It may be beneficial to evaluate the shape of the second EM radiation beam. For example, evaluating the shape may help when trying to obtain a specific shaped beam, such as one with higher symmetry.

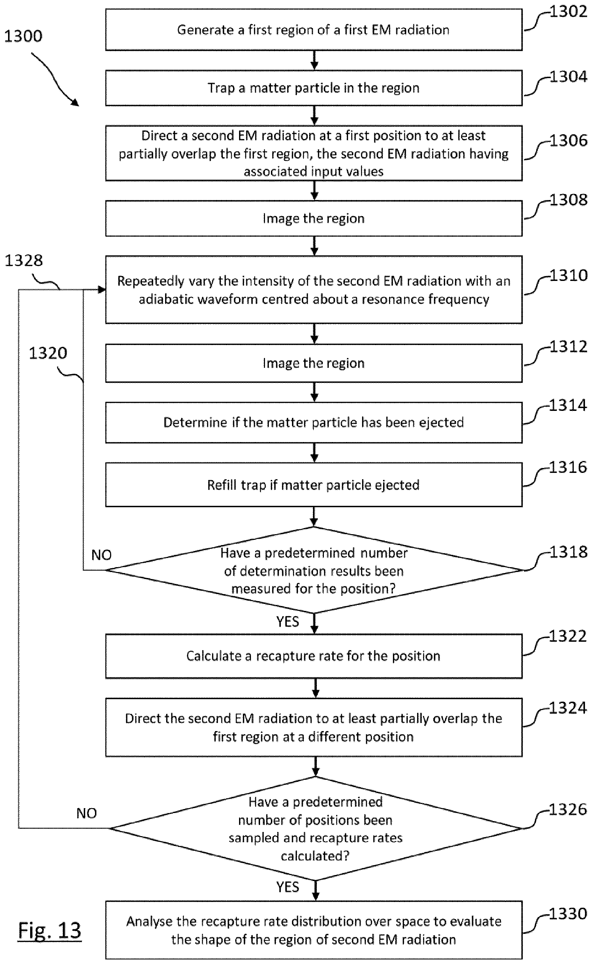

Figure 13 shows a flow chart 1300 for the method using stamping to evaluate the shape of the second EM radiation beam. The first EM radiation beam will be referred to as the trapping tweezer, and the second EM radiation beam will be referred to as the moving tweezer.

Steps 1302, 1304, 1406, 1308 of Figure 13 are equivalent to steps 602, 604, 606, 608 of Figure 6. The discussion and examples provided for these steps may be adapted for the application of shape evaluation.

In step 1310, the intensity of the moving tweezer beam is repeatedly varied at an optical trap resonance frequency. Much like step 610 of Figure 6, there are main resonance frequencies of the system that are dependent on at least the mass of the matter particle, the potential depth of the first EM radiation beam, and the size and geometry of the region of first EM radiation beam. There may exist resonance frequencies above and below the main resonance frequency which are close enough to the optical trap resonance frequencies to also suitably effective for stamping.

In this example, the aim is to evaluate the shape of the moving tweezer. In the examples discussed herein, the trapping tweezer has a circular Gaussian beam profile cross-section, and the moving tweezer has an elliptical Gaussian beam profile cross-section, with the maximum intensity located in the centre of the beam profile cross-section for both beams. Red-detuned radiation is used in both beams, where the detuning is far from the resonance frequency of the matter particle. This means that the minimum potential is located in the centre of the beam, and the tweezers may be considered aligned when the minimum potentials of both tweezers have the same spatial coordinates. Blue-detuned radiation in a bottle beam could also be used.

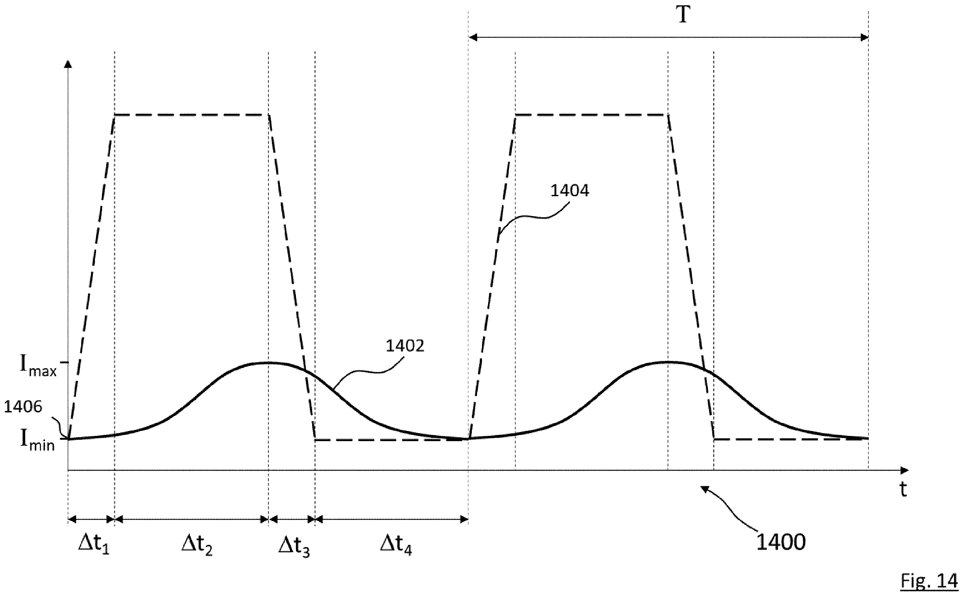

Unlike step 610 of Figure 6, the flickering of the moving tweezer's intensity is performed by varying the intensity with an adiabatic waveform such that the adiabatic condition of Equation 4 is fulfilled. Figure 14 shows an example of a control signal 1402 used to drive the stamping of the moving tweezers for the shape evaluation. Figure 14 plots an example of the variation of intensity of two adiabatic second EM radiation beam pulses 1402 as a function of time, overlaid with the variation of intensity of two non-adiabatic second EM radiation pulses 1404 used for alignment calibration. The intensity is proportional to the control signal used to drive the flickering/ stamping of the moving tweezers. The control signal may be supplied in terms of a time-dependent voltage and may be measured with an oscilloscope. The term adiabatic is used to signify that the intensity of the radiation beam changes at a slow enough rate so that a matter particle positioned at the point of the potential minimum, i.e. in the centre of the beam of a Gaussian red-detuned laser, does not gain energy and is therefore not ejected from the trapping beam. In other words, when the beams are aligned, the matter particle is not ejected from the optical trap site. This is unlike the method of alignment calibration, where a non-adiabatic waveform may be used such that a matter particle in the potential minimum of the moving tweezer is ejected from the optical trap.

The example of a control signal 1402 shown is sinusoidal in shape. The shallower gradient at point 1406 signifies a slower rate of change for the intensity, allowing the matter particle to adapt to the new conditions and not be ejected. Many more waveforms may be possible. For example, a trapezoid waveform similar to the waveform of control signal 1404 may be used. The frequency of the pulses in this example matches one of the optical trap resonance frequencies, therefore to obtain an adiabatic stamping the intensity of the pulses may be reduced from that of the non-adiabatic stamping, seen in the calibration method, such that the depth of the pulses are reduced. The respective intensities of the adiabatic pulses and non-adiabatic pulses and the intensity difference between them in Figure 14 may not be to scale.

The variation of the intensity of the second EM radiation beam may be controlled by providing signals to the intensity controlling means. The means may be, for example, an acousto-optical modulator (AOM) or electro-optical modulator (EOM). These signals may be provided as a waveform from a signal generator. The signals may indicate a maximum intensity $I_{max}$ and minimum intensity $I_{min}$. The maximum and minimum intensities may vary as a function of time. The signals may indicate a period $T$ and frequency.

The signals may indicate a predetermined number of pulses. For example, for a trapezoid signal, the signals may indicate a rise time $\Delta t_1$ and/or a fall time $\Delta t_3$. The signals may indicate an ON time $\Delta t_2$ and/or an OFF time $\Delta t_4$. For example, the control signal may have ~4µs rise/fall time, ~4µs time ON and ~4µs time OFF.

When the beams are aligned and the matter particle (and thus the trapping tweezer) has the same spatial coordinates as the potential minimum of the moving tweezer, the flickering of the moving tweezer may not cause the matter particle to be expelled. However, If the beams are not aligned, and the matter particle is positioned towards the edge of the moving tweezer's beam cross-section, then the matter particle may be affected by the flickering of the moving tweezer and be ejected. The displacement of the potential minimum of the moving tweezer from the matter particle may be, for example, between $0.05w_0^{MT}$ and $0.95w_0^{MT}$, where $w_0^{MT}$ is the beam waist of the moving tweezer beam. Since the moving tweezer beam may not be symmetrical, the beam waist may be different for different radial directions from the centre of the beam. The flickering may be a pulse or pulses of radiation, where the pulses are long enough so that the matter particle has time to interact with the radiation and move out of the trap. For a given optical trap resonance frequency, the pulses also need to be shallow enough to not force a displacement of the matter particle if the beams are aligned, but steep enough to force a displacement of the matter particle, if the beams are not aligned. This ensures that the rate of change of the intensity isn't too high for a given frequency. The intensity of the moving tweezer may take any value between the intensity of the trapping tweezer, $U_0$, and ten times the intensity of the trapping tweezer, $10U_0$, although preferably ten times the intensity of the trapping tweezer. For any depth of the moving tweezer between $U_0$ and $10U_0$, an adiabatic regime can be achieved if the rate of the flickering is changed. At a maximum magnitude of potential depth of $10U_0$, a smaller rate will be applied than if it were $U_0$. The steepness can be varied by changing the maximum and minimum intensities accordingly. The matter particle may be ejected from the optical trap when the frequency of the intensity flickering matches one of the resonance frequencies for the optical trap. As before, the resonance frequencies of the optical trap depend on the mass of the matter particle, the size and geometry of the region of first EM radiation and the potential depth of the first EM radiation.

In an example where an AOM is used to control the intensity of the pulses, the control signal sent to the AOM to drive the stamping is composed of a carrier frequency. The carrier frequency may be in a range from about 80 MHz to about 110MHz amplitude. The carrier frequency may be amplitude modulated by an envelope. The envelope may be a pulse. The pulse may have a sinusoidal waveform. The flickering may comprise between 2 to 5 cycles (or more cycles) of varying the intensity of the radiation. Each variation of the intensity of the radiation may be considered a pulse of the radiation. The frequency of the flickering may be dependent on the size of the region of first EM radiation, the potential depth of the first EM radiation, and the mass of the matter particle. In one example, for a Rubidium atom, the flickering frequency may be between about 10kHz and 100kHz. The flickering frequency may be 1/T, where T is the period as displayed in Figure 14.

Steps 1312, 1314, 1316, 1318, 1322, 1324, 1326 of Figure 13 are equivalent to steps 612, 614, 616, 618, 622, 624, 626 of Figure 6. The discussion and examples provided for these steps may be adapted for the application of shape evaluation. In the application of stamping used for shape evaluation, the determination results will most likely represent a lack of ejection of the matter particle when the moving tweezer is well-aligned with the matter particle. When not aligned, and the matter particle is located towards the edge of the moving tweezer beam, the determination results for the respective position of the moving tweezer will most likely represent an ejection of the matter particle. The determination results may be used to calculate recapture rates for respective positions of the moving tweezer.

An alternate method for obtaining the recapture rates may be used instead of using the steps of Figure 6 as described elsewhere.

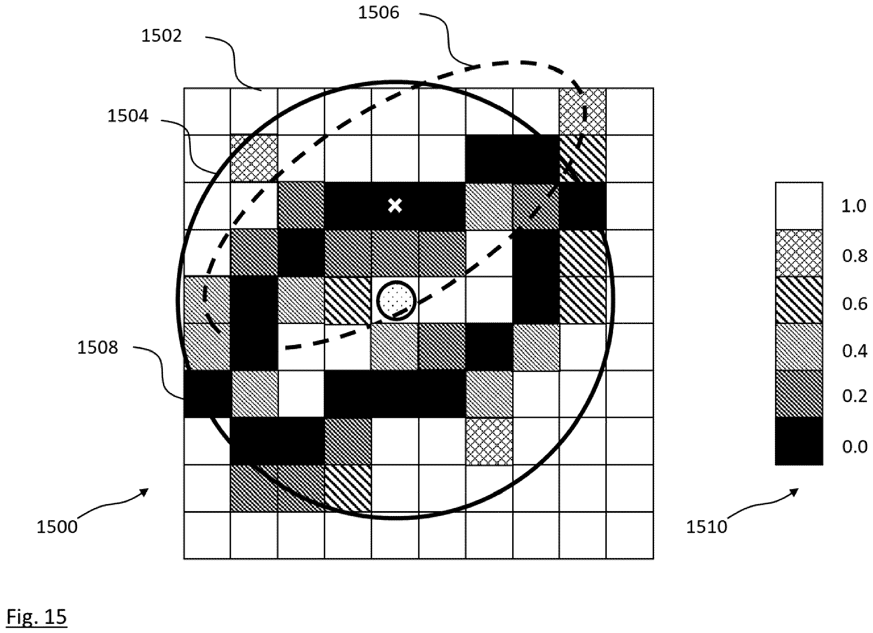

In step 1330, the recapture rate spatial distribution is analysed over space to evaluate the shape of the region of second EM radiation. The space may be the offset region. An example of how this may be achieved is shown in Figure 15.

Figure 15 shows a recapture rate spatial distribution profile, 1500, that shows the recapture rate of a matter particle as a function of the moving tweezer's position. The grid 1500 is split into 100 smaller tiles 1502 in a 10x10 format, although any grid arrangement may be chosen.

The trapping tweezer 1504 is shown as the solid circle and the moving tweezer 1506 is shown as the dashed ellipse. The dotted circle positioned in the centre of the black circle is the matter particle. The white cross positioned in the centre of the dashed ellipse is the position of the moving tweezer. The displayed position of the moving has a small spatial offset from the centre of the grid.

The grid 1500 corresponds to an offset region. The offset region shown in Figure 15, when compared to the sizes of the tweezers, is smaller than the offset regions shown in Figures 8a,b,c,d, although the offset region used in determining the recapture rate spatial distribution profile may be any suitable size compared to the size of the tweezers. Preferably the offset region is large enough such that a centred region of zero recapture rate fits entirely within the offset region. The centre of the grid corresponds to the initial position of the moving tweezer when directed using the initial control input values. In this example, the position of the centre of the grid lies on two intersecting lines, rather than in the middle of a tile.

A key 1510 is provided with different hatchings to assist with the reading of the recapture rates. The key only displays 6 values of recapture rate, but in actual practice there may be many more values of recapture rate that may be displayed. If enough determination results are obtained for each position, the distribution of possible recapture rates may appear to be substantially continuous. For example, Figure 15 assumes that five determination results were measured, therefore resulting in six possible discrete recapture rates.

The profile may be a map indicating recapture rate vs spatial coordinate relative to the region of first EM radiation acting as a trap for the matter particle. The profile may be generated by performing the step of directing the second EM radiation beam such that there is a different overlap with the first EM radiation beam before the step of producing further regions of first EM radiation.

In this example, the small tiles which comprise the black area have a zero recapture rate 1508. This means that in every determination result that corresponds to a black small tile, the matter particle was ejected from the optical trap. In the example shown, the matter particle is located towards the edge of the moving tweezer's beam cross-section 1506, therefore resulting in an ejection of the matter particle. This shows as a black small tile at the location of the moving tweezer.

Once the recapture rates have been calculated, it may be possible to analyse the recapture rate spatial distribution profile 1500 to determine the shape of the moving tweezer. In Figure 15, a black elliptic ring 1508 of zero recapture rate can be seen. This maps to the elliptic shape of the moving tweezer used in this example, and therefore performing stamping in such manner can evaluate the shape of the moving tweezer.

If there are multiple optical traps present, for example in the case where an SLM creates multiple optical traps out of one input trapping tweezer, then the above shape evaluation method may be carried out for the moving tweezer at each optical trap site. The shape of the tweezer may be different at each optical trap site due to dispersion effects that occur because of a different optical path being taken by the moving tweezer beam.

Moving tweezers are not the only type of radiation beam that can have their shape evaluated. For example, in a quantum computer it may be desired to evaluate the shape of an addressing beam used for performing quantum computations. If the addressing beam is of a frequency suitable for trapping the matter particle, in this instance an atom, then it may be possible to determine the shape of this beam at different trap sites using the same method as above, if the frequency of the addressing beam is detuned from the resonant frequency of the matter particle. In this example, the addressing beam is not used for moving matter particles.

**Claims**

1.  A method for interacting electromagnetic, EM, radiation with a matter particle; the method comprising:

    generating a region of first EM radiation; the first EM radiation centred about a first wavelength;
    trapping the matter particle in the region wherein one or more resonant frequencies for ejecting the matter particle from the region are associated with the region and matter particle;
    directing second EM radiation to at least partially overlap the region; the second EM radiation centred about a second wavelength;
    repeatedly varying the intensity of the second EM radiation at one or more of the said resonant frequencies.

2.  The method of claim 1 further comprising determining whether the matter particle has been ejected from the region.

3.  The method of claim 2 wherein determining whether the matter particle has been ejected from the region comprises monitoring the fluorescence of the matter particle.

4.  The method of claims 2 or 3 wherein the region of first EM radiation occupies a first portion of space; the method further comprising:

    releasing the matter particle by removing the region from the first portion of space;
    generating a further region of the first EM radiation occupying substantially the same first portion of space;
    trapping a further matter particle in the further region.

5.  The method of claim 4 further comprising

    directing second EM radiation to at least partially overlap the further region;
    repeatedly varying the intensity of the second EM radiation at one or more of the said resonant frequencies;
    determining whether the further matter particle has been ejected from the further region;
    determining an ejection probability from the determination of the ejection of the matter particle and further matter particle.

6.  The method as claimed in any of claims 2-5 further comprising:
    directing further second EM radiation to at least partially overlap the region wherein the overlap associated with the directing of further second EM radiation is different to the overlap associated with the directing of the second EM radiation.

7. The method as claimed in claim 6 wherein:

the directing of the second EM radiation comprises directing the second EM radiation along a first path;
the directing of the further second EM radiation comprises directing the further second EM radiation along a second path that is different to the first path.

8. The method of claims 6 or 7 further comprising:

repeatedly varying the intensity of the further second EM radiation at one or more of the said resonant frequencies; and,
determining whether a matter particle has been ejected from the region.

9. The method of claim 8 further comprising determining a matter particle ejection profile from:

a) the determination of whether the matter particle has been ejected from the region resulting from varying the intensity of the second EM radiation;
a) the determination of whether the matter particle has been ejected from the region resulting from varying the intensity of the further second EM radiation;

10. The method of claim 9 further comprising calibrating an apparatus for controlling the directing of second EM radiation from the matter particle ejection profile.

11. The method of claims 9 or 10 further comprising using the matter particle ejection profile to move a matter particle intended for use in a quantum computation.

12. The method of any preceding claim wherein the overlap of second radiation with first radiation comprises an overlap of a second radiation region with the region of the first radiation.

13. The method of claim 12 further comprising determining a shape of the second radiation region from the overlap.

14. A system for interacting electromagnetic, EM, radiation with a matter particle; the system comprising:

a first EM source assembly for generating a region of first EM radiation; the first EM radiation centred about a first wavelength;
a chamber for accommodating the matter particle and region of first EM radiation to allow trapping of the matter particle in the region; wherein one or more resonant frequencies for ejecting the matter particle from the region are associated with the region and matter particle;
a second EM source assembly for directing second EM radiation to at least partially overlap the region; the second EM radiation centred about a second wavelength;
apparatus for controlling repeatedly varying the intensity of the second EM radiation at one or more of the said resonant frequencies.

15. A system as claimed in claim 14 wherein:

the second EM source assembly comprises a second EM source;
the system comprises a focussing assembly comprising at least one element for receiving the first EM radiation output from the first EM source and second EM radiation output from the second EM source.

EP 4 571 784 A1

104

102

<u>Fig. 1</u>

100

EP 4 571 784 A1

Fig. 2a
200

Fig. 2b
202

Fig. 2c
204

Fig. 3

EP 4 571 784 A1

Fig. 4a

Fig. 4b

500

| 502 |
| --- |
| Generating a region of a first EM radiation |

↓

| 504 |
| --- |
| Trapping a matter particle in the region |

↓

| 506 |
| --- |
| Directing a second EM radiation to at least partially overlap the first region |

↓

| 508 |
| --- |
| Repeatedly vary the intensity of the second EM radiation at a resonance frequency associated with the region and matter particle. |

Fig. 5

600

**602** Generate a first region of a first EM radiation

**604** Trap a matter particle in the region

**606** Direct a second EM radiation at a first position to at least partially overlap the first region, the second EM radiation having associated input values

**608** Image the region

628

620

**610** Repeatedly vary the intensity of the second EM radiation with a non-adiabatic waveform centred about a resonance frequency

**612** Image the region

**614** Determine if the matter particle has been ejected

**616** Refill trap if matter particle ejected

**618** Have a predetermined number of determination results been measured for the position? — NO

YES

**622** Calculate a recapture rate for the position

**624** Direct the second EM radiation to at least partially overlap the first region at a different position

**626** Have a predetermined number of positions been sampled and recapture rates calculated? — NO

YES

**630** Analyse the recapture rate distribution over space to determine corrected input values that need to be applied to the system in order to correctly align the EM radiation

<u>Fig. 6</u>

Fig. 7

EP 4 571 784 A1

EP 4 571 784 A1

Fig. 8a

800

802

802

806

804

Fig. 8b

810

802

802

806

804

Fig. 8c

820

802

802

806

804

Fig. 8d

830

802

802

806

804

Fig. 9

EP 4 571 784 A1

Fig. 10

1000

1028

1020

| | |
|---|---|
| Generate a first region of a first EM radiation | 1002 |
| Trap a matter particle in the region | 1004 |
| Direct a second EM radiation at a first position to at least partially overlap the first region, the second EM radiation having associated input values | 1006 |
| Image the region | 1008 |
| Repeatedly vary the intensity of the second EM radiation with a non-adiabatic waveform centred about a resonance frequency | 1010 |
| Image the region | 1012 |
| Determine if the matter particle has been ejected | 1014 |
| Refill trap if matter particle ejected | 1016 |
| Direct the second EM radiation to at least partially overlap the first region at a different position | 1018 |

Have a predetermined number of positions have been sampled? — 1022

NO

YES

Have a predetermined number of determination results been measured for each position? — 1024

NO

YES

Calculate a recapture rate for each position — 1026

Analyse the recapture rate distribution over space to determine corrected input values that need to be applied to the system in order to correctly align the EM radiation — 1030

Fig. 11

Fig. 12

EJECTION

NO EJECTION

EP 4 571 784 A1

1300

```
┌─────────────────────────────────────────────────┐
│  Generate a first region of a first EM radiation │ ⌐1302
└─────────────────────────────────────────────────┘
                        │
                        ▼
┌─────────────────────────────────────────────────┐
│          Trap a matter particle in the region    │ ⌐1304
└─────────────────────────────────────────────────┘
                        │
                        ▼
┌─────────────────────────────────────────────────┐
│  Direct a second EM radiation at a first position │ ⌐1306
│  to at least partially overlap the first region,  │
│  the second EM radiation having associated input  │
│  values                                           │
└─────────────────────────────────────────────────┘
                        │
                        ▼
┌─────────────────────────────────────────────────┐
│                 Image the region                  │ ⌐1308
└─────────────────────────────────────────────────┘
```

1328

```
┌─────────────────────────────────────────────────┐
│  Repeatedly vary the intensity of the second EM   │ ⌐1310
│  radiation with an adiabatic waveform centred     │
│  about a resonance frequency                      │
└─────────────────────────────────────────────────┘
```

1320

```
┌─────────────────────────────────────────────────┐
│                 Image the region                  │ ⌐1312
└─────────────────────────────────────────────────┘
                        │
                        ▼
┌─────────────────────────────────────────────────┐
│    Determine if the matter particle has been      │ ⌐1314
│                    ejected                         │
└─────────────────────────────────────────────────┘
                        │
                        ▼
┌─────────────────────────────────────────────────┐
│        Refill trap if matter particle ejected     │ ⌐1316
└─────────────────────────────────────────────────┘
```

```
            ◇───────────────────────────◇
      NO    │  Have a predetermined      │ ⌐1318
     ◄──────│  number of determination   │
            │  results been measured     │
            │  for the position?         │
            ◇───────────────────────────◇
                        │ YES
                        ▼
┌─────────────────────────────────────────────────┐
│         Calculate a recapture rate for the        │ ⌐1322
│                    position                        │
└─────────────────────────────────────────────────┘
                        │
                        ▼
┌─────────────────────────────────────────────────┐
│  Direct the second EM radiation to at least       │ ⌐1324
│  partially overlap the first region at a          │
│  different position                               │
└─────────────────────────────────────────────────┘
```

```
            ◇───────────────────────────◇
      NO    │  Have a predetermined      │ ⌐1326
     ◄──────│  number of positions been  │
            │  sampled and recapture     │
            │  rates calculated?         │
            ◇───────────────────────────◇
                        │ YES
                        ▼
┌─────────────────────────────────────────────────┐
│  Analyse the recapture rate distribution over     │ ⌐1330
│  space to evaluate the shape of the region of     │
│  second EM radiation                              │
└─────────────────────────────────────────────────┘
```

<u>Fig. 13</u>

Fig. 14

EP 4 571 784 A1

Fig. 15

**EUROPEAN SEARCH REPORT**

Application Number

EP 23 30 7172

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BAKOS J S ET AL: "Interaction of frequency modulated light pulses with rubidium atoms in a magneto-optical trap", THE EUROPEAN PHYSICAL JOURNAL D ; ATOMIC, MOLECULAR AND OPTICAL PHYSICS, SOCIETÀ ITALIANA DI FISICA, BO, vol. 39, no. 1, 4 April 2006 (2006-04-04), pages 59-66, XP019386348, ISSN: 1434-6079, DOI: 10.1140/EPJD/E2006-00073-7 * page 61, left-hand column, lines 5-9 * * page 61, left-hand column, lines 16-5 from below, 9-7 from below * * page 61, left-hand column, line 31 * | 1,2,14 | INV. G21K1/00 |
| X | WO 2022/132389 A (HARVARD COLLEGE [US]; MASSACHUSETTS INST TECHNOLOGY [US] ET AL.) 11 August 2022 (2022-08-11) | 1,14,15 | |
| A | * paragraph [0091] * | 2-13 | |
| A | CN 111 399 309 A (UNIV SOUTH CHINA NORMAL) 10 July 2020 (2020-07-10) | 1-15 | TECHNICAL FIELDS SEARCHED (IPC) G21K G06N |

The present search report has been drawn up for all claims

| Place of search | Date of completion of the search | Examiner |
|---|---|---|
| Munich | 15 May 2024 | Oestreich, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 30 7172

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2024

| Patent document cited in search report | | Publication date | Patent family member(s) | Publication date |
|---|---|---|---|---|
| WO 2022132389 | A | 11-08-2022 | ------------------------------------ | |
| CN 111399309 | A | 10-07-2020 | NONE | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HAROLD J METCALF** ; **PETER VAN DER STRA-TEN.** Laser cooling and trapping of atoms.. *JOSA B*, 2003, vol. 20 (5), 887-908